(19) Europäisches Patentamt
European Patent Office
Office européen des brevets

(11) **EP 4 603 692 A1**

(12) **EUROPEAN PATENT APPLICATION**

(43) Date of publication:
**20.08.2025 Bulletin 2025/34**

(21) Application number: **25153457.4**

(22) Date of filing: **23.01.2025**

(51) International Patent Classification (IPC):
**F02D 13/02** (2006.01)   **C01B 3/26** (2006.01)
**F02B 43/10** (2006.01)   **F02B 75/02** (2006.01)
**F02D 19/06** (2006.01)   **F02M 27/02** (2006.01)

(52) Cooperative Patent Classification (CPC):
**F02D 19/0671; C01B 3/26; F02B 43/10;
F02B 75/021; F02D 13/0276; F02D 19/0644;
F02M 21/0227; F02M 25/12; F02M 27/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.02.2024 JP 2024021473**

(71) Applicant: **MAZDA MOTOR CORPORATION**
**Hiroshima 730-8670 (JP)**

(72) Inventors:
• **Iname, Chikara**
**Fuchu-cho, Aki-gun, 730-8670 (JP)**

• **Harada, Yuji**
**Fuchu-cho, Aki-gun, 730-8670 (JP)**
• **Matsuda, Hirotsugu**
**Fuchu-cho, Aki-gun, 730-8670 (JP)**
• **Uchida, Kenji**
**Fuchu-cho, Aki-gun, 730-8670 (JP)**
• **Horikoshi, Masahiro**
**Fuchu-cho, Aki-gun, 730-8670 (JP)**

(74) Representative: **Müller-Boré & Partner**
**Patentanwälte PartG mbB**
**Friedenheimer Brücke 21**
**80639 München (DE)**

(54) **FUEL REFORMING SYSTEM FOR VEHICLE**

(57)     The vehicle, on which a reciprocating engine 3 performing a predetermined six-stroke cycle is mounted, includes a fuel reforming system 1A. A decomposer 6 for storing carbon is provided. The decomposer 6 decomposes hydrocarbon fuel into carbon and hydrogen gas by using heat and a pressure of combustion gas produced in a combustion chamber 3a, and separates the hydrogen gas by causing the hydrogen gas to permeate a hydrogen permeable membrane 63. The decomposer 6 is disposed adjacent to an intake port 33 in a state of communicating with the intake port 33 via the hydrogen permeable membrane 63, and is configured to be able to supply the separated hydrogen gas as fuel to the combustion chamber 3a through the intake port 33.

FIG. 1

**EP 4 603 692 A1**

**Description**

[Technical Field]

The invention relates to a decomposer for an engine and a fuel reforming system for a vehicle on which an engine is mounted. The invention also relates to a vehicle and a fuel supplying method.

[Background Art]

A device (decomposition device) for directly decomposing a hydrocarbon into carbon and hydrogen is described in Patent Literature 1. This decomposition device includes a reactor in which a catalyst is accommodated. When raw material gas containing hydrocarbons is supplied to the reactor, carbon produced by the reaction of the catalyst adheres to the catalyst. Reaction gas containing hydrogen flows through the reactor.

[Citation List]

[Patent Literature]

[Patent Literature 1] JP22022-104521A

[Summary]

[Technical Problem]

In the technical field of vehicles (for example, four-wheeled vehicles), there is a demand for an approach to being carbon neutral. In order to make a vehicle, on which an engine using hydrocarbon fuel (including gasoline and/or light oil), carbon neutral, there is a need for a new technique of collecting carbon (C) or carbon dioxide (CO2) from the hydrocarbon fuel, in addition to improvement in thermal efficiency of the engine and/or improvement in exhaust emission performance.

In the vehicle, on which the engine using the hydrocarbon fuel is mounted, in order to collect carbon or carbon dioxide, it is considered to:

(1) collect carbon dioxide after combustion of the hydrocarbon fuel; or
(2) decompose the hydrocarbon fuel into carbon and hydrogen gas before combustion of the hydrocarbon fuel and collect carbon.

In consideration of a fact that collected carbon dioxide or carbon is stored in the vehicle, (2) is advantageous in terms of fuel economy performance of the vehicle due to a reason that carbon dioxide is heavier than carbon. In addition, in the case of (2), it is also possible to use the hydrogen gas as the fuel for the engine. There is also an advantage that, when the hydrogen gas is combusted, no carbon oxide is produced due to the combustion.

Thus, it is considered to mount the above-described decomposition device onto the vehicle. The decomposition device includes a heater for raising a temperature of the catalyst. Thus, when the decomposition device is mounted on the vehicle, heat of the engine can be used to raise the temperature of the catalyst.

However, when the hydrogen gas is used as the fuel for the engine, a gas tank for storing the hydrogen gas is usually required. In addition to the gas tank, members such as a gas pipe and a valve are also required. That is, in order to supply the hydrogen gas to the engine, a system for supplying the hydrogen gas is separately required.

It is disadvantageous for the vehicle with a limited space to mount such a hydrogen gas supply system. In addition, mounting of such a hydrogen gas supply system on the vehicle increases vehicle weight. Thus, this type of the fuel reforming system also has the disadvantage when being mounted on the vehicle.

The technique disclosed herein provides a decomposer and/or a fuel reforming system suitable for mounting on a vehicle.

[Solution to Problem]

The invention is defined in independent claims. Particularly, an embodiment relates to a fuel reforming system for a vehicle, on which an engine or a reciprocating engine is mounted. In the reciprocating engine, a combustion chamber where combustion occurs is partitioned in a cylinder in which a piston reciprocates.

The reciprocating engine is configured to perform a cycle including at least one of: an intake stroke in which at least intake air is introduced into the combustion chamber through an intake port by lowering the piston; a compression stroke in which air-fuel mixture containing fuel supplied to the combustion chamber is compressed by raising the piston; an expansion stroke in which the piston is lowered by combustion of the air-fuel mixture; a recompression stroke in which combustion gas is compressed by raising the piston; a re-expansion stroke in which the piston is lowered; and an exhaust stroke in which exhaust gas is discharged through an exhaust port by raising the piston.

Particularly the reciprocating engine is configured to perform a six-stroke cycle including: an intake stroke in which at least intake air is introduced into the combustion chamber through an intake port by lowering the piston; a compression stroke in which air-fuel mixture containing fuel supplied to the combustion chamber is compressed by raising the piston; an expansion stroke in which the piston is lowered by combustion of the air-fuel mixture; a recompression stroke in which combustion gas is compressed by raising the piston; a re-expansion stroke in which the piston is lowered; and an exhaust stroke in which exhaust gas is discharged through an exhaust port by raising the piston.

For example, the fuel reforming system includes: a decomposer that communicates with the combustion chamber via an openable/closable (openable and/or closable) third port, decomposes hydrocarbon fuel into carbon and hydrogen gas, and stores the carbon; and a hydrocarbon fuel supply section that supplies the hydrocarbon fuel to the decomposer.

The decomposer is configured to decompose the hydrocarbon fuel into the carbon and the hydrogen gas by using heat and a pressure of the combustion gas produced in the combustion chamber and to separate the hydrogen gas by causing the hydrogen gas to permeate a hydrogen permeable membrane. The decomposer is disposed to communicate with the intake port via the hydrogen permeable membrane, and is configured to be able to supply the separated hydrogen gas as fuel to the combustion chamber through the intake port. Particularly, in a state of communicating with the intake port via the hydrogen permeable membrane, the decomposer is disposed adjacent to the intake port, and is configured to be able to supply the separated hydrogen gas as fuel to the combustion chamber through the intake port.

This fuel reforming system is used particularly in the vehicle, on which the reciprocating engine performing the specific six-stroke cycle is mounted. The fuel reforming system includes the decomposer that communicates with the combustion chamber via the openable/closable third port. The decomposer uses the heat and the pressure of the combustion gas produced in the combustion chamber to produce carbon and the hydrogen gas from the hydrocarbon fuel.

Since the heat and the pressure of the combustion gas are used to produce carbon and the hydrogen gas, a dedicated heater is unnecessary. Thus, the fuel reforming system can be simplified. Produced carbon is stored in the decomposer. Thus, it is possible to suppress carbon emission.

The decomposer is disposed adjacent to the intake port in the state of communicating with the intake port via the hydrogen permeable membrane, and is configured to be able to supply the separated hydrogen gas as the fuel to the combustion chamber through the intake port.

Accordingly, the produced hydrogen gas can be supplied as the fuel to the combustion chamber through the intake port. Moreover, the hydrogen gas is directly delivered from the decomposer to the intake port. Thus, there is no need for attachment of a hydrogen gas supply system such as a gas tank. The fuel reforming system can be obtained by the very compact and simple structure.

Since the decomposer is located in the vicinity of the combustion chamber, its heat is easily transferred thereto. Accordingly, it is possible to promote a reforming reaction and a partial oxidation reaction, in each of which the hydrocarbon fuel is decomposed into carbon and the hydrogen gas. The hydrogen gas can be produced efficiently. According to the invention, the fuel reforming system suitable for mounting on the vehicle can be obtained by using the functions of the reciprocating engine.

A first injector for injecting the hydrocarbon fuel toward inside of the third port may be attached to the third port, and, in a latter half of the recompression stroke, the hydrocarbon fuel may be injected from the first injector e.g., in an open state of the third port. The fuel reforming system may further include the first injector.

In the latter half of the recompression stroke in which the piston is close to top dead center, the pressure of the combustion gas is high. Thus, in the open state of the third port, the high-temperature combustion gas flows into the third port, and an internal pressure of the decomposer is increased. Since the hydrocarbon fuel is injected toward the third port, into which the high-temperature, high-pressure combustion gas flows, the hydrocarbon fuel can be effectively vaporized and dispersed in the combustion gas. In this way, the high-temperature, high-pressure combustion gas in a homogenized state of the hydrocarbon fuel is introduced into the decomposer.

As a result, the decomposition into carbon and the hydrogen gas can be promoted. Accordingly, the hydrogen gas can be effectively produced.

The decomposer may have: a case that is installed along the intake port; a reforming member that is accommodated in the case in a manner to extend along the case; and a closed pipe passage that is provided in a central portion of the reforming member and an open end of which communicates with the third port. A second injector for injecting the hydrocarbon fuel from a closed end side of the closed pipe passage toward the closed pipe passage may be attached to the decomposer. The fuel reforming system may further include the second injector. In a first half of the recompression stroke, the hydrocarbon fuel may be injected from the second injector e.g., in an open state of the third port.

In the first half of the recompression stroke, even in the open state of the third port, the internal pressure of the decomposer remains low. In this state, when the hydrocarbon fuel is injected from the closed end side of the closed pipe passage toward the closed pipe passage, the hydrocarbon fuel flows toward the third port through the closed pipe passage. At this time, the combustion gas flows into the third port while an amount thereof is increased. The hydrocarbon fuel collides with the combustion gas.

Accordingly, it is possible to prevent the hydrocarbon fuel from flowing into the combustion chamber. The hydrocarbon fuel is then effectively dispersed in the high-temperature combustion gas. In this way, the high-temperature, high-pressure combustion gas in the homogenized state of the hydrocarbon fuel is introduced into the decomposer.

As a result, the decomposition into carbon and the hydrogen gas can be promoted. Accordingly, the hydrogen gas can be effectively produced.

The third port may be opened during the re-expansion stroke.

After the hydrocarbon fuel is decomposed into carbon and the hydrogen gas, impure gas such as nitrogen gas remains in the decomposer. Thus, a relatively large amount of the impure gas is contained in the gas (residual gas) remaining in the decomposer.

As the amount of the impure gas is increased, an amount of the high-temperature combustion gas required for the reforming reaction is reduced. Thus, such residual gas interferes with the production of the hydrogen gas. Meanwhile, by opening the third port during the re-expansion stroke, the inside of the decomposer can be scavenged. That is, the residual gas that remains in the decomposer can be reduced.

Since the inside of the decomposer can be scavenged every cycle, the hydrogen gas can be produced in the decomposer every cycle. This is also advantageous for a reduction in pump loss of the engine.

The decomposer may have a communication passage therein, and the communication passage communicates between the third port and an intake supply section located on an upstream side of the intake port. The reciprocating engine may has the intake supply section. A regulation valve capable of blocking a flow from the third port side toward the intake supply section side (or a flow from the third port toward the intake supply section) may be installed between the intake supply section and the communication passage. In other words, the fuel reforming system may further has a regulation valve which is capable of blocking a flow from the third port toward the intake supply section and which is installed between the intake supply section and the communication passage.

For example, when the reciprocating engine is operated in a high-load and high-speed range, filling efficiency may be insufficient. To handle this, with such a configuration, the combustion chamber can communicate with the intake supply section via the communication passage and the third port. That is, the intake air can be introduced into the combustion chamber through these paths, in addition to the intake port. Thus, the filling efficiency can be improved. The insufficient filling efficiency is compensated.

[Effects of Invention]

According to the invention, by using the functions of the reciprocating engine, it is possible to efficiently produce the hydrogen gas and use the hydrogen gas as the fuel while collecting carbon in the very compact configuration. Therefore, it is possible to obtain the fuel reforming system suitable for mounting on the vehicle.

[Brief Description of Drawings]

[FIG. 1] FIG. 1 is a schematic view of a fuel reforming system according to a first embodiment.
[FIG. 2] FIG. 2 is a view that is seen from an arrow A1 direction in FIG. 1.
[FIG. 3] FIG. 3 is a schematic view of a decomposer.
[FIG. 4] FIG. 4 is a block diagram of a control system.
[FIG. 5] FIG. 5 is a view illustrating a six-stroke cycle.
[FIG. 6] FIG. 6 illustrates examples of operation of each valve, injection timing of fuel to be reformed, and a change in an internal pressure of the decomposer.
[FIG. 7] FIG. 7 is a flowchart of control by a first fuel reforming system.
[FIG. 8] FIG. 8 is a schematic view (corresponding to FIG. 2) of a fuel reforming system according to a second embodiment.
[FIG. 9] FIG. 9 illustrates examples of operation of each valve, injection timing of fuel to be reformed, and a change in an internal pressure of a decomposer.
[FIG. 10] FIG. 10 is a view illustrating a predetermined state in a recompression stroke.
[FIG. 11] FIG. 11 is a flowchart of control by a second fuel reforming system.
[FIG. 12] FIG. 12 is a schematic view (corresponding to FIG. 2) of a fuel reforming system according to a third embodiment.
[FIG. 13] FIG. 13 illustrates examples of operation of each valve, injection timing of fuel to be reformed, and a change in an internal pressure of a decomposer.
[FIG. 14] FIG. 14 is a view illustrating a predetermined state in an intake stroke.
[FIG. 15A] FIG. 15A is a flowchart of control by a third fuel reforming system.
[FIG. 15B] FIG. 15B is a flowchart of control by the third fuel reforming system.

[Description of Embodiments]

The invention makes use of vehicle-specific functions. In this way, hydrocarbon fuel can be reformed, and hydrogen gas can be effectively used as fuel with a compact structure.

That is, it is possible to obtain a fuel reforming system suitable for mounting on the vehicle.

Hereinafter, the invention will be described in first to third embodiments. However, the following description is merely illustrative in nature.

<First Embodiment>

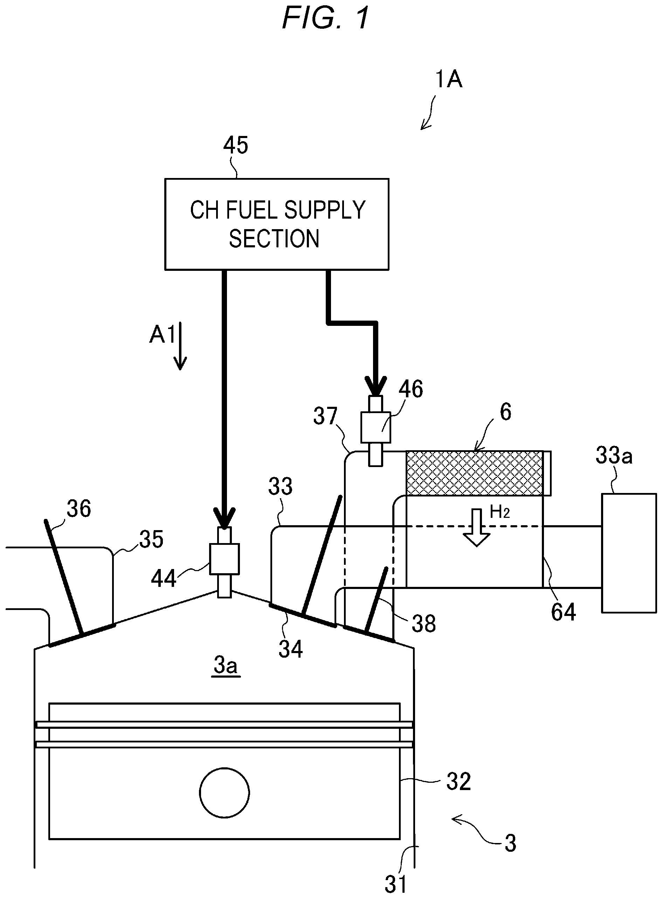

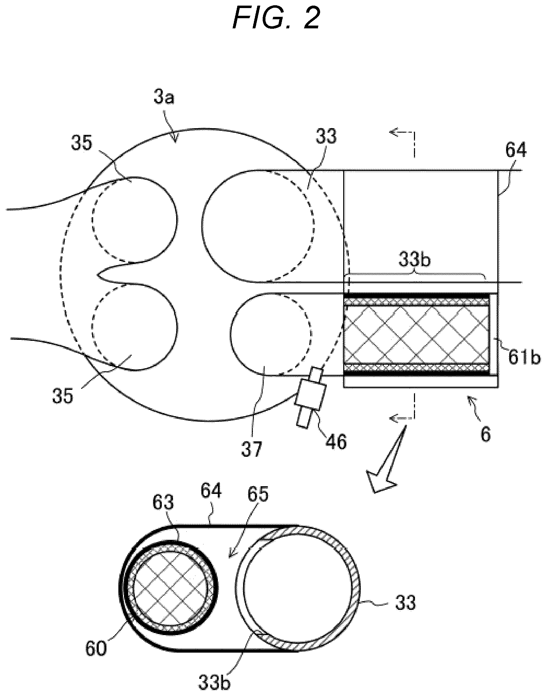

FIG. 1 and FIG. 2 each illustrate an example of a fuel reforming system (first fuel reforming system 1A) mounted on a vehicle. FIG. 2 is a view that is seen from an arrow A1 direction in FIG. 1.

(Configuration of First Fuel Reforming System)

Hydrocarbon fuel is stored in a fuel tank that is mounted on the vehicle. The hydrocarbon fuel is gasoline, for example. The hydrocarbon fuel is not limited to gasoline. The first fuel reforming system 1A decomposes the hydrocarbon fuel into carbon and hydrogen gas.

Carbon is stored in one or more decomposers 6 described below. The hydrogen gas is used as fuel for a reciprocating engine 3. The first fuel reforming system 1A makes the vehicle, on which the hydrocarbon fuel is mounted, carbon neutral.

The first fuel reforming system 1A includes the reciprocating engine 3 (hereinafter, also simply referred to as the engine 3). The engine 3 includes a cylinder 31 and a piston 32 that reciprocates in the cylinder 31. In an upper end portion of the cylinder 31, a combustion chamber 3a, which is partitioned e.g., on a lower surface by the piston 32, is formed. The engine 3 may include the plural cylinders 31.

The plural cylinders 31 are arranged in a direction in which a crankshaft of the engine 3 extends, for example. The piston 32 in each of the cylinders 31 is connected to the crankshaft via a connecting rod.

The connecting rod may convert or may be used to convert reciprocating motion of the piston 32 into rotation of the crankshaft. The crankshaft may be connected to drive wheels via a transmission. The engine 3 outputs a driving force for travel of the vehicle.

The engine 3 has one or more intake ports 33. The intake port 33 communicates with the upper portion of the cylinder 31, that is, the combustion chamber 3a. Each of the cylinders 31 has the single intake port 33 or a plurality of intake ports 33. The intake port 33 of each of the cylinders is connected to an intake manifold 33a (an example of the intake supply section) located on an upstream side thereof, i.e., upstream of the intake port 33. The engine 3 may has the intake manifold 33a.

Fresh air (outside air) is distributed and supplied from the intake manifold 33a to each of the intake ports 33. As will be described below, the fresh air is introduced into each of the combustion chambers 3a through the respective intake port 33. Thus, the intake air at least contains the fresh air. The intake air may contain exhaust gas recirculation (EGR) gas. As will be described below, in this engine 3, the intake air may contain the hydrogen gas.

The engine 3 includes one or more intake valves 34. The intake valve 34 may be a poppet valve that opens/closes (opens and/or closes) the intake port 33.

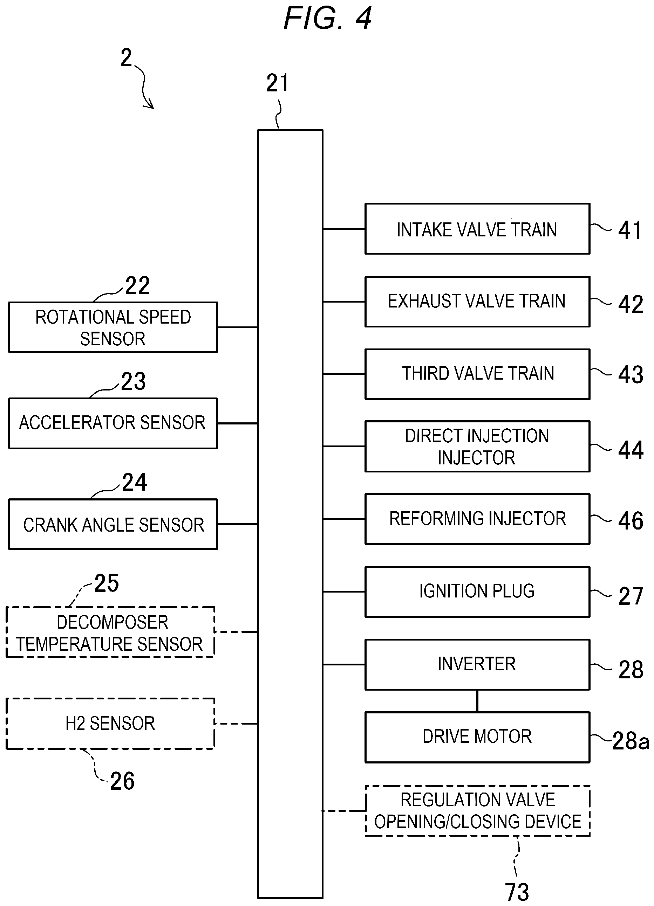

When the intake valve 34 is opened, the intake air is introduced into the combustion chamber 3a. An intake valve train 41 illustrated in FIG. 4 may open/close (open and/or close) the intake valve 34. The intake valve train 41 includes an intake camshaft that is mechanically connected to the intake valve 34, for example.

The intake valve train 41 may continuously change valve timing of the intake valve 34 (so-called sequential-valve timing (S-VT)). The intake valve train 41 may also continuously change a valve lift of the intake valve 34 (so-called continuously variable valve lift (CVVL)). As the intake valve train 41, a known hydraulic or electric mechanism can be employed. The intake valve train 41 changes the valve timing and/or the valve lift according to an operating state of the engine 3.

The engine 3 has one or more exhaust ports 35. The exhaust port 35 communicates with the combustion chamber 3a. Each of the cylinders 31 has one or more, particularly two, exhaust ports 35. The single exhaust port 35 may be provided. The exhaust port 35 is connected to an exhaust pipe. As will be described below, exhaust gas is discharged from the combustion chamber 3a through the exhaust port 35.

The engine 3 has one or more exhaust valves 36. The exhaust valve 36 may be a poppet valve that opens/closes (opens and/or closes) the exhaust port 35. When the exhaust valve 36 is opened, the exhaust gas is discharged to the outside of the cylinder 31. An exhaust valve train 42 illustrated in FIG. 4 may open/close (open and/or close) the exhaust valve 36. The exhaust valve train 42 has an exhaust camshaft that is mechanically connected to the exhaust valve 36, for example.

The exhaust valve train 42 may continuously change valve timing of the exhaust valve 36 (so-called S-VT). The exhaust valve train 42 may also continuously change a valve lift of the exhaust valve 36 (so-called CVVL). As the exhaust valve train 42, a known hydraulic or electric mechanism can be employed. The exhaust valve train 42 changes the valve timing and/or the valve lift according to the operating state of the engine 3.

The engine 3 may have one or more third ports 37. The third port 37 communicates with the combustion chamber 3a. Each of the cylinders 31 has the single third port 37 or a plurality of third ports 37.

The third port 37 may be adjacent to the intake port 33 and may extend along the intake port 33. The third port 37 has an inner diameter that is equal to or smaller than an inner diameter of the intake port 33. In order to facilitate understanding, in FIG. 1, the exhaust port 35 and the third port 37 are illustrated in an offset manner.

The engine 3 has one or more valves (or one or more on-off valves) 38. The on-off valve 38 may be a poppet valve that opens/closes (opens and/or closes) the third port 37. A third valve train 43 illustrated in FIG. 4 may open/close (open and/or close) the on-off valve 38. The third valve train 43 has a third camshaft that is mechanically connected to the on-off valve 38, for example.

The third valve train 43 may continuously change valve timing and a valve lift of the on-off valve 38. That is, the third valve train 43 may change the valve timing and/or the valve lift according to the operating state of the engine 3. For example, in a six-stroke cycle described below, as basic operation, the third valve train 43 opens the on-off valve 38 twice in one cycle.

The third valve train 43 can stop opening/closing (opening and/or closing)_of the on-off valve 38. As a valve stopping mechanism for stopping opening/closing of the on-off valve 38, a known hydraulic or electric mechanism can be employed.

The valve stopping mechanism may be incorporated into a rocker arm that is interposed between the third camshaft and the on-off valve 38, for example. Alternatively, the valve stopping mechanism may be incorporated into a lash adjuster that supports the rocker arm. The on-off valve 38 may be mechanically connected to the intake camshaft or the exhaust camshaft.

For example, a direct injection injector 44 is attached to the engine 3. An injection hole of the direct injection injector 44 faces the combustion chamber 3a. The direct injection injector 44 is connected to a hydrocarbon fuel supply section 45.

The hydrocarbon fuel supply section 45 includes a fuel tank for storing the hydrocarbon fuel and a fuel pump for pumping the hydrocarbon fuel. The hydrocarbon fuel supply section 45 supplies the hydrocarbon fuel to the direct injection injector 44. The direct injection injector 44 injects the hydrocarbon fuel as fuel into the combustion chamber 3a.

A reforming injector 46 may be attached to the third port 37. The reforming injector 46 herein corresponds to the first injector. An injection hole of the reforming injector 46 may face the inside of the third port 37.

The reforming injector 46 is also connected to the hydrocarbon fuel supply section 45. The hydrocarbon fuel supply section 45 supplies the hydrocarbon fuel into the reforming injector 46. The reforming injector 46 injects the hydrocarbon fuel to be reformed (fuel to be reformed) toward the inside of the third port 37.

(Decomposer)

The decomposer 6 is connected to the third port 37. The decomposer 6 communicates with the combustion chamber 3a via the third port 37.

The decomposer 6 decomposes the hydrocarbon fuel into carbon and the hydrogen gas. The decomposer 6 is attached to each of the cylinders 31.

The decomposer 6 is disposed to communicate with the intake port 33 via a hydrogen permeable membrane 63. Particularly, the decomposer 6 is disposed adjacent to the intake port 33. In other words, in a state of communicating with the intake port 33 via a hydrogen permeable membrane 63 described below, the decomposer 6 is disposed adjacent to the intake port 33. Accordingly, the decomposer 6 is configured to be able to supply the separated hydrogen gas as the fuel to the combustion chamber 3a through the intake port 33.

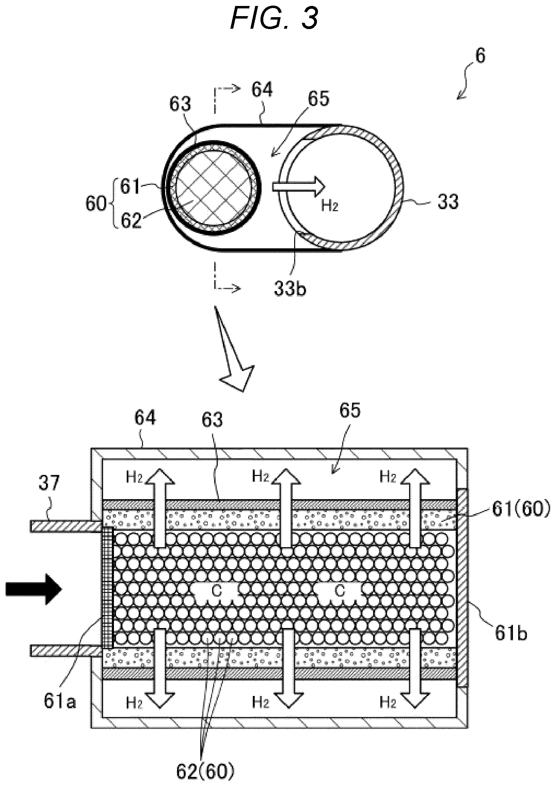

FIG. 3 illustrates a structure of the decomposer 6. The decomposer 6 produces the hydrogen gas by a reforming reaction. By using a catalyst, the decomposer 6 decomposes the hydrocarbon fuel into carbon and the hydrogen gas particularly at a high temperature at which the decomposer 6 can be practically used in the vehicle. Then, the hydrogen gas is separated by permeating the hydrogen permeable membrane 63.

The decomposer 6 is a so-called membrane reactor. The decomposition of the hydrocarbon fuel such as isooctane is expressed by the following chemical reaction formula:

$$iC8H18(g) = 8C(s) + 9H2$$

Collection of carbon as a solid suppresses an increase in vehicle weight. The first fuel reforming system 1A is suitable as an in-vehicle system.

The decomposer 6 includes a reforming member 60. The reforming member 60 may include a cylindrical support body 61 and a ball-shaped carrier 62. For example, the hydrogen permeable membrane 63 is supported on the outside of the support body 61 (the hydrogen permeable membrane 63 may be supported on the inside of the support body 61).

A net 61a for catching the carrier 62 is attached to an opening of the support body 61. The inside of the support body 61 communicates with the third port 37 through the net 61a. Meanwhile, the other opening of the support body 61 is sealed with a lid body 61b.

As the carrier 62, an aluminum oxide ball can be used, for example. The catalyst is applied to a surface of the carrier 62. An example of the catalyst that can be used to decompose the hydrocarbon fuel is Ni-Al-Fe alloy. Any of various types of the catalysts can be used as long as the catalyst can be used to decompose the hydrocarbon fuel.

The support body 61 may be filled with a large number of the carriers 62. Use of the balls as the carriers 62 increases a surface area of the catalyst and improves decomposition performance of the decomposer 6. A shape of the carrier 62 is not limited to a specific shape.

Particularly, carbon produced by the decomposition of the hydrocarbon fuel adheres to the surface of the carrier 62. The decomposer 6 also stores carbon. By using the balls, a carbon storage amount in the decomposer 6 is increased. In addition, even when the carbon storage amount is increased, the decomposition performance of the decomposer 6 can be maintained for a long time. Furthermore, the use of the balls facilitates the separation of the hydrogen gas decomposed from the hydrocarbon fuel. As will be described below, the efficient separation of the hydrogen gas also suppresses degradation of the decomposition performance of the decomposer 6.

The support body 61 is made of porous ceramic, for example. The porous ceramic is zirconia, for example. The support body 61 has a function of accommodating the carriers 62 of the catalyst described below and a function of holding the hydrogen permeable membrane 63.

The hydrogen permeable membrane 63 may be attached to an outer circumferential surface of the support body 61. The hydrogen permeable membrane 63 is a Pd alloy film, for example. The hydrogen permeable membrane 63 has pores in a molecular size and selectively allows the hydrogen gas to permeate.

The hydrogen gas that is produced in the support body 61 permeates the hydrogen permeable membrane 63 and reaches the outside of the reforming member 60 (see blank arrows in FIG. 3). Impure gas, such as nitrogen gas, other than the hydrogen gas remains inside the support body 61. The reforming member 60 can adopt any of various structures.

The decomposer 6 may have a case 64. The case 64 is installed in a manner to extend along the intake port 33. The reforming member 60 is accommodated in the case 64. A part of the intake port 33 is also accommodated in the case 64. Thus, the part of the intake port 33 and the reforming member 60 are located in a sealed communication space 65.

The intake port 33 may have an opening 33b that faces the communication space 65. The opening 33b is formed to extend along the reforming member 60. The opening 33b may have a large number of holes. In short, the opening 33b only needs to allow the hydrogen gas to flow from the communication space 65 to the inside of the intake port 33.

A space constituting the communication space 65 may be provided between the outer circumferential surface of the reforming member 60 and an inner circumferential surface of the case 64. The case 64 guides the hydrogen gas to the inside of the intake port 33 through the opening 33b.

The third port 37 may be connected to an end portion of the case 64. For example, the third port 37 is connected to one end of the cylindrical support body 61 and communicates with the inside thereof. Combustion gas produced in the combustion chamber 3a and the fuel to be reformed (hydrocarbon fuel) injected from the reforming injector 46 are introduced into the support body 61 and the hydrogen permeable membrane 63 through the third port 37 (see a black arrow in FIG. 3). In the support body 61, the hydrocarbon fuel is decomposed into carbon and the hydrogen gas.

The hydrogen gas that has permeated the hydrogen permeable membrane 63 flows into the intake port 33 through the communication space 65 (see the blank arrows in FIGs. 1 and 3). The hydrogen gas that has flowed into the intake port 33 is supplied to the combustion chamber 3a through the intake port 33 and is used as the fuel.

(Controller)

FIG. 4 is a block diagram of a control system 2 mounted on the vehicle. The first fuel reforming system 1A cooperates with this control system 2. The first fuel reforming system 1A and the control system 2 may share devices when necessary. The control system 2 includes a controller 21. The controller 21 includes: hardware such as a processor, memory, and an interface; and software such as a database and a control program.

A rotational speed sensor 22 may be electrically connected to the controller 21. The rotational speed sensor 22 is attached to the engine 3. The rotational speed sensor 22 outputs a measurement signal corresponding to a rotational speed of the crankshaft to the controller 21. The controller 21 obtains a speed of the engine 3 based on the measurement signal of the rotational speed sensor 22.

An accelerator sensor 23 may be electrically connected to the controller 21. The accelerator sensor 23 is attached to an accelerator pedal. The accelerator sensor 23 outputs a signal corresponding to a depression amount of the accelerator pedal to the controller 21. The controller 21 obtains a required load of the engine 3 based on the measurement signal from the accelerator sensor 23.

A crank angle sensor 24 may be electrically connected to the controller 21. The crank angle sensor 24 is attached to the engine 3. The crank angle sensor 24 outputs a signal corresponding to an angle of the crankshaft to the controller 21. The controller 21 obtains a position of the piston 32 in each of the cylinders 31 based on the signal of the crank angle sensor 24.

For example, the intake valve train 41, the exhaust valve train 42, and the third valve train 43 are electrically connected to the controller 21. The controller 21 outputs a control signal to each of the intake valve train 41, the exhaust valve train 42, and the third valve train 43 according to the operating state of the engine 3. The intake valve train 41 changes the valve timing and/or the valve lift of the intake valve 34 based on the control signal from the controller 21 including the signal from the crank angle sensor 24.

Similarly, the exhaust valve train 42 changes the valve timing and/or the valve lift of the exhaust valve 36 based on the control signal from the controller 21. The third valve train 43 also switches between opening/closing and stopping of the on-off valve 38 based on the control signal from the controller 21. Then, the third valve train 43 changes the valve timing and/or the valve lift of the on-off valve 38 when necessary.

The direct injection injector 44 and the reforming injector 46 described above may be each electrically connected to the controller 21. The controller 21 outputs a control signal to the direct injection injector 44 and the reforming injector 46.

The direct injection injector 44 injects a predetermined amount of the hydrocarbon fuel into the combustion chamber 3a at predetermined timing based on the control signal from the controller 21. The reforming injector 46 injects a predetermined amount of the fuel to be reformed into the third port 37 at predetermined timing based on the control signal from the controller 21.

The control system 2 may have a spark plug 27. The spark plug 27 is attached to the engine 3 in a manner to face the combustion chamber 3a. The spark plug 27 is electrically connected to the controller 21. The controller 21 outputs a control signal to the spark plug 27. The spark plug 27 ignites air-fuel mixture in the combustion chamber 3a at predetermined timing based on the control signal from the controller 21.

The control system 2 may include an inverter 28. For example, the vehicle includes a drive motor 28a (assist motor) that outputs the driving force for travel of the vehicle. The inverter 28 controls the drive motor 28a thereof. The inverter 28 is electrically connected to the controller 21. The controller 21 outputs a control signal to the inverter 28 when output of the engine 3 is insufficient. As a result, the drive motor 28a is actuated to assist with the operation of the engine 3.

Particularly, a decomposer temperature sensor 25, a hydrogen gas sensor 26, and a regulation valve opening/closing device 73, each of which is indicated by an imaginary line in FIG. 4, are devices related to embodiments described below. Thus, these will be described below.

(Operation of Reciprocating Engine)

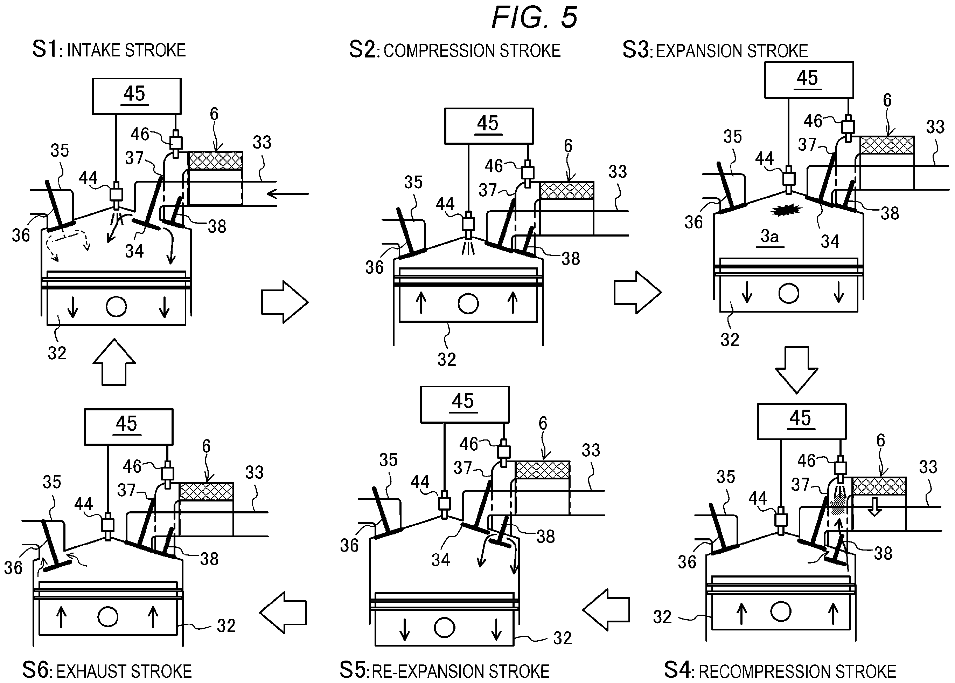

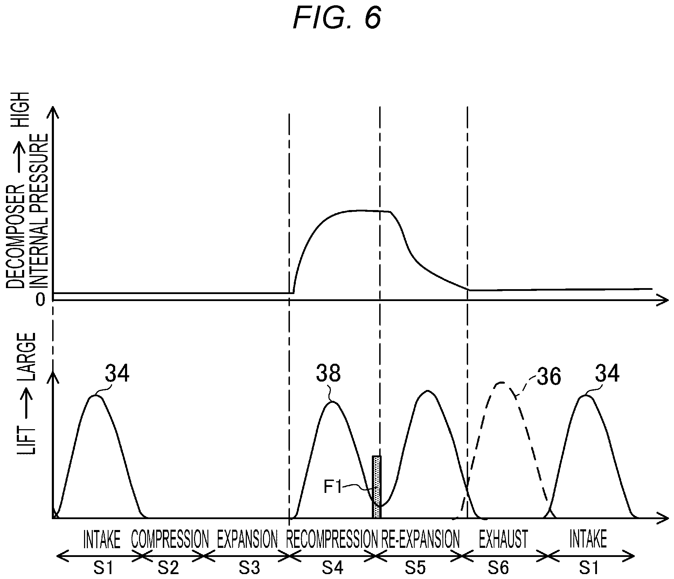

The engine 3 performs a cycle, particularly a six-stroke cycle, in order for the decomposer 6 to decompose the hydrocarbon fuel. FIG. 5 illustrates an example of each stroke in the six-stroke cycle. FIG. 6 illustrates examples of the valve timing and the valve lift of each of the valves, the injection timing of the fuel to be reformed, and a change in an internal pressure of the decomposer 6 in the six-stroke cycle.

S1 is an intake stroke. In the intake stroke S1, the engine 3 introduces the intake air into the combustion chamber 3a by lowering the piston 32. In the intake stroke S1, the intake valve 34 is opened. The intake air is introduced into the combustion chamber 3a through the intake port 33.

The intake air at least contains the fresh air. As will be described below, the intake air may contain the hydrogen gas. When the intake air containing the hydrogen gas is introduced in the combustion chamber 3a, the hydrogen gas is used as the fuel. In the engine 3, by using the hydrogen gas, the hydrocarbon fuel as the fuel can be reduced or does not have to be used.

The intake air may contain the EGR gas. The EGR gas may be so-called external EGR gas that is recirculated into an intake pipe through an EGR passage.

As indicated by an imaginary line in FIG. 5, the exhaust valve 36 may be opened in the intake stroke S1. When the exhaust valve 36 is opened, the exhaust gas is introduced into the combustion chamber 3a through the exhaust port 35.

The exhaust gas that is introduced into the combustion chamber 3a may be so-called internal EGR gas. An amount of the internal EGR gas in the combustion chamber 3a is adjusted according to a magnitude of the load of the engine 3. For example, the amount of the internal EGR gas is adjusted such that, as the load on the engine 3 is increased, the amount of the internal EGR gas in the combustion chamber 3a is reduced. As a result, an amount of the intake air (fresh air) introduced into the combustion chamber 3a is increased.

The engine 3 outputs power corresponding to a request by adjusting the amount of the internal EGR gas (and/or the amount of the fresh air). In the intake stroke S1, the on-off valve 38 of the third port 37 is closed.

In the example of FIG. 5, the direct injection injector 44 injects the hydrocarbon fuel into the combustion chamber 3a e.g., during the intake stroke S1. The direct injection injector 44 may inject hydrocarbon fuel during a compression stroke S2. The direct injection injector 44 may inject the hydrocarbon fuel in a period from the intake stroke S1 to the compression stroke S2. By injection of the hydrocarbon fuel, the air-fuel mixture is produced in the combustion chamber 3a.

S2 is the compression stroke following the intake stroke S1. In the compression stroke S2, the engine 3 compresses the air-fuel mixture in the combustion chamber 3a by raising the piston 32. In the compression stroke S2, the intake valve 34, the exhaust valve 36, and the on-off valve 38 are all closed.

The spark plug 27 ignites the air-fuel mixture in the combustion chamber 3a e.g., at timing near compression top dead center. The air-fuel mixture starts combustion. S3 is an expansion stroke following the compression stroke S2. In the expansion stroke S3, the piston 32 is lowered by the combustion of the air-fuel mixture. In the expansion stroke S3, the intake valve 34, the exhaust valve 36, and the on-off valve 38 are all closed.

S4 is a recompression stroke following the expansion stroke S3. In the recompression stroke S4, the engine 3 compresses combustion gas in the combustion chamber 3a by raising the piston 32. In the recompression stroke S4, the on-off valve 38 is opened. The intake valve 34 and the exhaust valve 36 are closed. In this way, the compressed combustion gas is introduced into the decomposer 6 through the third port 37.

Furthermore, according to the operating state of the engine 3, the reforming injector 46 may inject the fuel to be reformed toward the inside of the third port 37 in the recompression stroke S4. For example, as indicated by a reference sign F1 in FIG. 6, the reforming injector 46 injects the fuel to be reformed in a latter half of the recompression stroke S4.

In the recompression stroke S4, a pressure of the combustion gas is increased over time. The internal pressure of the decomposer 6 is lower than an internal pressure of the combustion chamber 3a. Accordingly, the high-temperature combustion gas flows from the combustion chamber 3a into the decomposer 6 while the gas stored in the decomposer 6 is compressed. Then, in a latter half of the recompression stroke S4, a differential pressure is low, and the high-temperature, high-pressure combustion gas flows into the decomposer 6.

In this state, since the fuel to be reformed is injected toward the third port 37, into which the high-pressure combustion gas flows, the fuel to be reformed can be effectively dispersed in the combustion gas even when the third port 37 is narrow. In this way, the high-temperature, high-pressure combustion gas in a state where the fuel to be reformed is homogenized is introduced into the decomposer 6.

As described above, in the decomposer 6, the hydrocarbon fuel is decomposed into carbon and the hydrogen gas by the heat of the combustion gas and the catalyst. Since the fuel to be reformed is homogenized, the fuel to be reformed can efficiently contact the catalyst. Due to the high temperature and the high pressure, the reforming reaction can be promoted. Accordingly, the hydrogen gas can be effectively produced.

Carbon is stored in the decomposer 6. The hydrogen gas permeates the hydrogen permeable membrane 63 by an internal pressure difference between the decomposer 6 and the intake port 33 (the internal pressure of the decomposer 6 > the internal pressure of the intake port 33). The hydrogen gas that has permeated the hydrogen permeable membrane 63 is delivered to the intake port 33 via the communication space 65. The hydrogen gas that has been delivered to the intake port 33 is stored in the intake port 33.

Since the high pressure of the combustion gas in the recompression stroke S4 acts inside the decomposer 6, the produced hydrogen gas rapidly permeates the hydrogen permeable membrane 63. Since the hydrogen gas inside the decomposer 6 is reduced, the decomposition of the fuel to be reformed is promoted.

Moreover, the decomposer 6 may be integrally formed with the intake port 33 and the third port 37, which are located in the vicinity of the combustion chamber 3a at the high temperature and communicate with the combustion chamber 3a. Accordingly, the heat of the combustion chamber 3a is easily transferred to the decomposer 6, and thus, the heat can also be effectively used. For this reason, the decomposer 6 can efficiently produce a relatively large amount of the hydrogen gas even in a small size.

S5 is a re-expansion stroke following the recompression stroke S4. In the re-expansion stroke S5, the intake valve 34 and the exhaust valve 36 are closed. Then, the piston 32 is lowered. The on-off valve 38 is opened in the re-expansion stroke S5. When the on-off valve 38 is opened, the combustion gas stored in the decomposer 6 is suctioned and flows into the combustion chamber 3a.

After the recompression stroke S4, residual gas remains in the decomposer 6. The residual gas may contain a large amount of the impure gas such as the nitrogen gas. That is, in the decomposer 6, the hydrogen gas and carbon are removed from the combustion gas due to the decomposition by the catalyst and the separation by the hydrogen permeable membrane 63. Meanwhile, the impure gas such as the nitrogen gas remains as is. Accordingly, a relatively large amount of the impure gas such as the nitrogen gas may be contained in the residual gas remaining in the decomposer 6.

As the amount of the impure gas is increased, an amount of the high-temperature combustion gas required for the reforming reaction is reduced. The residual gas thus interferes with the production of the hydrogen gas. By opening the third port 37 during the re-expansion stroke S5, the inside of the decomposer 6 can be scavenged. That is, the amount of the residual gas remaining in the decomposer 6 can be reduced.

Since the inside of the decomposer 6 can be scavenged every cycle, the hydrogen gas can be produced in the decomposer 6 every cycle. In addition, opening of the on-off valve 38 in the re-expansion stroke S5 is advantageous in reducing pump loss of the engine 3.

S6 is an exhaust stroke following the re-expansion stroke S5. In the exhaust stroke S6, the engine 3 discharges the combustion gas in the combustion chamber 3a through the exhaust port 35 by raising the piston 32. In the exhaust stroke S6, the exhaust valve 36 is opened. The combustion gas in the combustion chamber 3a (including the residual gas scavenged from the decomposer 6) is discharged to the exhaust port 35. In the exhaust stroke S6, the intake valve 34 and the on-off valve 38 are closed.

After the exhaust stroke S6, the engine 3 returns to the intake stroke S1. In the intake stroke S1, when the intake valve 34 is opened, the intake air containing the hydrogen gas is introduced into the combustion chamber 3a through the intake port 33. When the intake air containing the hydrogen gas is introduced into the combustion chamber 3a, as described above, the hydrogen gas is used as the fuel. In this engine, with use of the hydrogen gas, the amount of the hydrocarbon fuel as the fuel can be reduced, or the use of the hydrocarbon fuel can be avoided.

At a boundary between the intake stroke S1 and the exhaust stroke S6, the timing at which the intake valve 34 is closed and the timing at which the exhaust valve 36 is opened may slightly overlap each other around the top dead center. So-called valve overlap occurs.

Similarly, at a boundary between the re-expansion stroke S5 and the exhaust stroke S6, timing at which the on-off valve 38 is closed and timing at which the exhaust valve 36 is opened may slightly overlap each other around the bottom dead center.

The first fuel reforming system 1A stores carbon produced by the decomposition of the hydrocarbon fuel in the decomposer 6. Then, the hydrogen gas produced by the decomposition of the hydrocarbon fuel is combusted in the engine 3. Thus, no carbon oxide is produced by the combustion. The first fuel reforming system 1A can become carbon neutral.

The first fuel reforming system 1A also decomposes the hydrocarbon fuel by using the heat and the pressure generated by the engine 3. Accordingly, a separate dedicated device is not required. In addition, the decomposer 6 is adjacent to the intake port 33, and the produced hydrogen gas is immediately delivered to the intake port 33. In the intake stroke S1, the hydrogen gas is introduced into the combustion chamber 3a in the state of being contained in the intake air. Thus, the hydrogen gas can be efficiently supplied as the fuel to the combustion chamber 3a with the very simple configuration. The first fuel reforming system 1A is useful as the in-vehicle system.

When the storage amount of carbon in the decomposer 6 is increased, carbon is collected from the decomposer 6. For example, at the time of bringing the vehicle into a shop for maintenance, the carrier 62 to which carbon has adhered is taken out from the decomposer 6, and carbon is removed from the carrier 62 by using a mill, for example. Collected carbon can be used as industrial carbon. The carrier 62 from which carbon has been removed can be stored in the decomposer 6 after the catalyst is reapplied thereto when necessary.

In the six-stroke cycle, the injection of the hydrocarbon fuel from the direct injection injector 44 is not essential. For example, while the vehicle is decelerated, the hydrocarbon fuel may not be injected from the direct injection injector 44 (so-called fuel cut). In addition, in the case where combustion energy of the hydrogen gas contained in the intake air is sufficient for the required output for the engine 3, the hydrocarbon fuel may not be injected from the direct injection injector 44.

On the other hand, in the case where a high load is required for the engine 3, or the hydrogen gas as the fuel is not required for the engine 3, operation in a normal four-stroke cycle may be performed. That is, the operation in which the recompression stroke S4 and the re-expansion stroke S5 may be omitted from the six-stroke cycle described above may be performed.

(Specific Example of Control by First Fuel Reforming System)

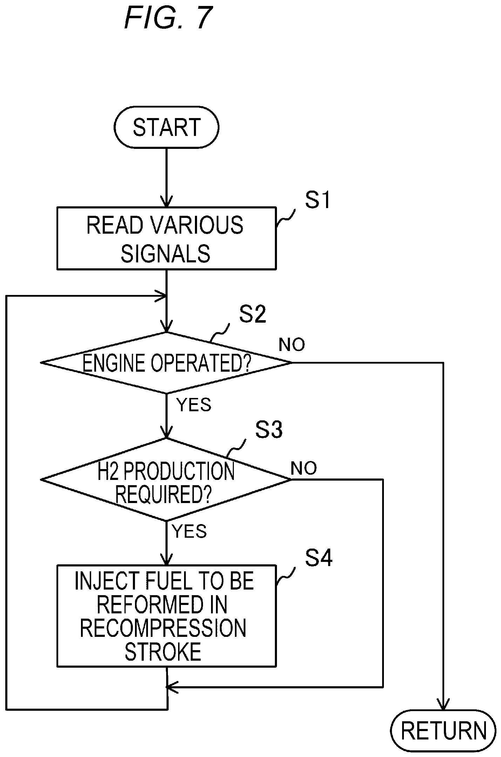

FIG. 7 illustrates an example of control by the first fuel reforming system 1A. It is assumed that the engine 3 performs the combustion in the above-described six-stroke cycle.

The controller 21 reads the various signals input from the accelerator sensor 23 and the like (step S1). During the operation of the engine 3, the controller 21 may identify the output required for the engine 3 based on the read signals, and executes the operation in the above-described six-stroke cycle (Yes in step S2). Then, with termination of the operation of the engine 3, the control by the controller 21 is also terminated (No in step S2).

During the operation of the engine 3, the controller 21 may determine whether to produce the hydrogen gas from the required output for the engine 3, the operating state of the engine 3, and the like (step S3).

As a result, when determining that the hydrogen gas has to be produced, as illustrated in FIG. 6, the controller 21 may inject the fuel to be reformed in the latter half of the recompression stroke S4 (step S4).

For example, the produced amount of the hydrogen gas can be controlled based on the injection amount of the fuel to be reformed, the temperature of the decomposer 6, and the like. The controller 21 adjusts the injection amount of the fuel to be reformed according to the operating state of the engine 3.

On the other hand, when determining that the production of the hydrogen gas is unnecessary, the controller 21 does not inject the fuel to be reformed. The consumption of the hydrocarbon fuel can be suppressed. During the operation of the engine 3, the controller 21 repeats such processing.

<Second Embodiment>

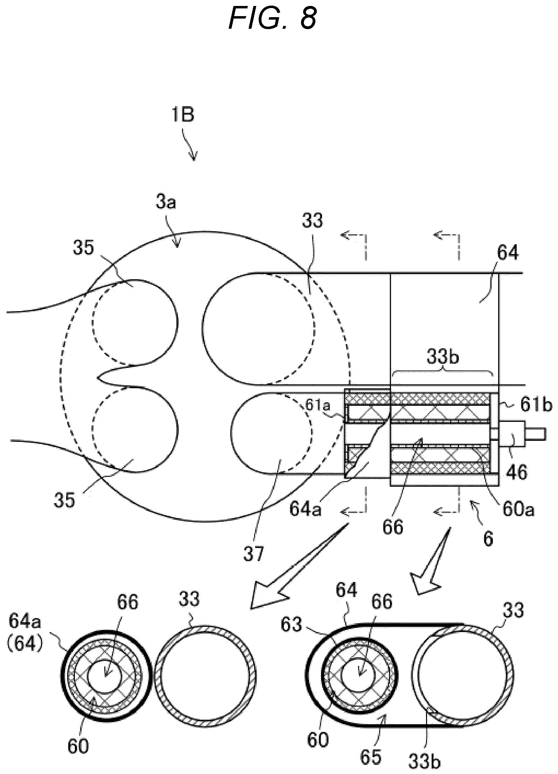

FIG. 8 illustrates another example of the fuel reforming system (second fuel reforming system 1B) mounted on the vehicle. A basic configuration of the second fuel reforming system 1B is the same or substantially the same as that of the first fuel reforming system 1A. Thus, the same reference numerals are used to simplify or omit the description of the components having the same contents.

(Configuration of Second Fuel Reforming System)

The second fuel reforming system 1B differs from the first fuel reforming system 1A in the configurations of the decomposer 6 and the like.

For example, in a case of the decomposer 6 of the second fuel reforming system 1B, first, the reforming member 60 further includes a tube 60a that has a smaller diameter than the support body 61. Similar to the net 61a, the tube 60a has a function of catching the carrier 62 and is provided coaxially with the support body 61 at a center thereof.

One end of the tube 60a is attached to the net 61a, and the other end of the tube 60a is attached to the lid body 61b. In this way, a central portion of the reforming member 60 is formed with a closed pipe passage 66, an open end of which communicates with the third port 37.

The reforming injector 46 may be attached to the lid body 61b. The injection hole of the reforming injector 46 faces the inside of the closed pipe passage 66. Accordingly, this reforming injector 46 injects the fuel to be reformed from a closed end side of the closed pipe passage 66 toward the closed pipe passage 66. The reforming injector 46 herein corresponds to the second injector.

In the case of the decomposer 6 of the second fuel reforming system 1B, secondly, the case 64 has a non-communicating section 64a that does not have the communication space 65. More specifically, the tubular non-communicating section 64a is provided in a portion of the case 64 on the third port 37 side in a manner to only surround the reforming member 60.

Correspondingly, the opening 33b of the intake port 33 is not formed in the non-communicating section 64a. The hydrogen permeable membrane 63 is not formed in the non-communicating section 64a, either. The opening 33b of the intake port 33 is formed in a portion of the case 64, which has the communication space 65, on an opposite side of the third port 37.

(Controller)

In the second fuel reforming system 1B, as indicated by the imaginary line in FIG. 4, devices are added to the control system 2 of the first fuel reforming system 1A. Particularly, the decomposer temperature sensor 25 and the hydrogen gas sensor 26 are further electrically connected to the controller 21.

The decomposer temperature sensor 25 may be attached to the decomposer 6. The decomposer temperature sensor 25 measures an internal temperature of the decomposer 6.

The controller 21 outputs a control signal to the decomposer temperature sensor 25. Based on the control signal from the controller 21, the decomposer temperature sensor 25 outputs a signal corresponding to the internal temperature of the decomposer 6 to the controller 21. The controller 21 may determine appropriateness of the temperature of the decomposer 6 based on the signal from the decomposer temperature sensor 25.

The hydrogen gas sensor 26 may be attached to the decomposer 6. The hydrogen gas sensor 26 measures an amount of the hydrogen gas.

The controller 21 outputs a control signal to the hydrogen gas sensor 26. Based on the control signal from the controller 21, the hydrogen gas sensor 26 outputs a signal corresponding to the amount of the hydrogen gas (concentration of the hydrogen gas) to the controller 21. The controller 21 may determine a degree of performance degradation of the decomposer 6 based on the signal from the hydrogen gas sensor 26.

(Operation of Reciprocating Engine)

In the second fuel reforming system 1B, similarly to the first fuel reforming system 1A, the engine 3 performs the six-stroke cycle in order for the decomposer 6 to decompose the hydrocarbon fuel. That is, the engine 3 performs each of the strokes illustrated in FIG. 5.

However, the content thereof is different from that of the first fuel reforming system 1A. First, the injection timing of the fuel to be reformed is different.

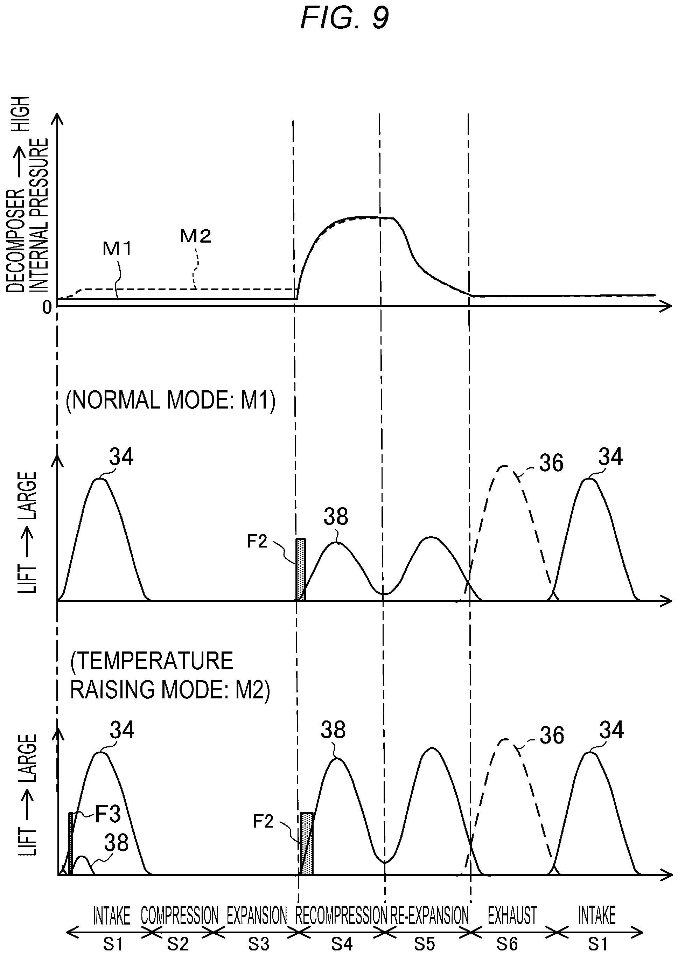

Secondly, there are a plurality of operation modes, particularly two operation modes including a normal mode and a temperature-raising mode. FIG. 9 illustrates examples of the valve timing and the valve lift of each of the valves, the injection timing of the fuel to be reformed, and a change in an internal pressure of the decomposer 6 in these normal mode and temperature-raising mode.

A middle chart of FIG. 9 illustrates the valve timing and the like of each of the valves in a normal mode M1. A bottom chart illustrates the valve timing and the like of each of the valves in the temperature-raising mode M2. The top chart illustrates the change in the internal pressure of the decomposer 6 in these normal mode M1 and temperature-raising mode M2.

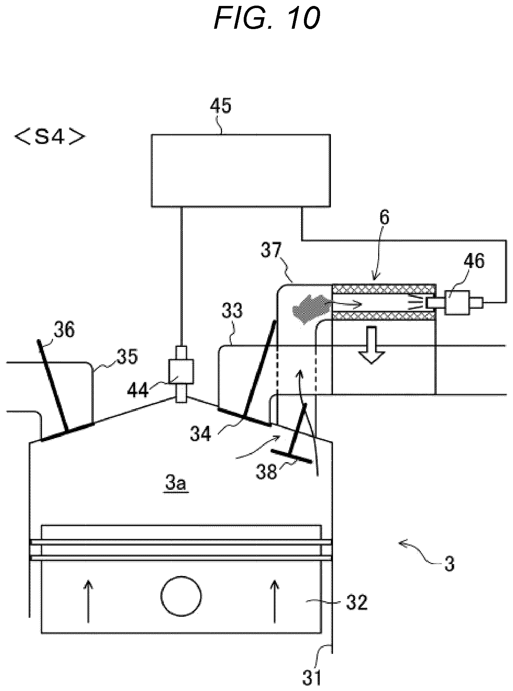

In the second fuel reforming system 1B, as indicated by a reference numeral F2 in FIG. 9, the fuel to be reformed is injected from the reforming injector 46 in a first half of the recompression stroke S4. FIG. 10 illustrates such a state. In the recompression stroke S4, the piston 32 is raised, and the on-off valve 38 is opened. In this way, the high-temperature combustion gas in the combustion chamber 3a is introduced into the decomposer 6 through the third port 37.

In the first half of the recompression stroke S4, the internal pressure of the combustion chamber 3a is still low. When the on-off valve 38 is opened in this state, due to the small differential pressure with respect to the internal pressure of the decomposer 6, the high-temperature combustion gas in the combustion chamber 3a gently flows into the third port 37.

Then, in this state, when the fuel to be reformed is injected from the closed end side of the closed pipe passage 66 toward the closed pipe passage 66, the fuel to be reformed rapidly flows toward the third port 37 through the closed pipe passage 66. At this time, the combustion gas flows into the third port 37 while the amount thereof is increased. The fuel to be reformed collides with the combustion gas.

Accordingly, it is possible to prevent the fuel to be reformed from flowing into the combustion chamber 3a. Then, the fuel to be reformed is effectively dispersed in the high-temperature combustion gas and vaporized. At this time, a valve lift amount of the on-off valve 38 may be relatively made small. In this way, a vigorous state of the combustion gas flowing vigorously into the third port 37 can be maintained for a long time. This is advantageous for prevention of outflow and homogenization of the fuel to be reformed.

Then, the high-temperature combustion gas in a state where the fuel to be reformed is homogenized is made to flow back to the closed pipe passage 66 by the fuel gas that sequentially flows into the third port 37. The homogenized fuel to be reformed can efficiently contact the catalyst. In this state, the internal pressure of the decomposer 6 is gradually increased. Accordingly, the reforming reaction can be promoted. Accordingly, the hydrogen gas can be effectively produced.

In the second fuel reforming system 1B, the normal mode M1 and the temperature-raising mode M2 are executed according to the temperature of the decomposer 6. For example, the normal mode M1 is executed in a state where the temperature of the decomposer 6 is suitable for the reforming reaction. The temperature-raising mode M2 is executed in a state where the temperature of the decomposer 6 is low or lower than a predetermined temperature, and thus unsuitable for the reforming reaction.

The basic operation in the normal mode M1 is the same or substantially the same as that of the first fuel reforming system 1A except for the injection timing of the fuel to be reformed. In contrast, in the boost mode M2, as indicated by a reference sign F3 in FIG. 9, the fuel to be reformed is injected from the reforming injector 46 during the intake stroke S1 (preliminary injection). At the same time, operation to temporarily open the on-off valve 38 (temporary valve opening operation) is performed.

By the preliminary injection, the hydrocarbon fuel is supplied to the inside of the third port 37. A preliminary injection amount may be relatively small. In the intake stroke S1, the intake air (fresh air) is introduced into the combustion chamber 3a. Accordingly, by opening the on-off valve 38 during the intake stroke S1, some of the intake air also flows into the support body 61.

In the temporary valve opening operation, the on-off valve 38 may be instantaneously opened in the first half of the intake stroke S1. That is, the valve lift amount of the on-off valve 38 may be small. The valve timing in the temporary valve opening operation is preferably immediately after the preliminary injection, that is, immediately after the exhaust valve 36 is closed. Since the exhaust valve 36 is closed, the exhaust gas no longer flows out of the combustion chamber 3a.

Meanwhile, the intake valve 34 starts to open greatly. Accordingly, the large amount of the intake air flows into the third port 37 at the relatively low internal pressure, and the injected fuel to be reformed collides with the intake air.

As a result, in addition to the hydrocarbon fuel, the air (oxygen) is also supplied into the decomposer 6. Thus, the reforming reaction (especially, a partial oxidation reaction) is likely to occur on the inside of the decomposer 6. The internal pressure of the decomposer 6 is also slightly increased. Such a state also continues in the intake stroke S1, the compression stroke S2, and the expansion stroke S3.

Since the decomposer 6 is located in the vicinity of the combustion chamber 3a, and the heat is easily transferred thereto, the internal temperature of the decomposer 6 is increased by the combustion in the combustion chamber 3a during that time. Moreover, since the partial oxidation reaction is an exothermic reaction, the internal temperature of the decomposer 6 can be further increased.

Furthermore, the inside of the decomposer 6 can be maintained for a long time in a state where the partial oxidation reaction is likely to occur. Thus, the production of the hydrogen gas can be promoted, and the produced amount of the hydrogen gas can be increased.

Thereafter, the same operation or substantially the same operation as in the normal mode M1 is performed in the boost mode M2. However, the injection amount of the fuel to be reformed may be increased. The valve lift amount of the on-off valve 38 may also be increased.

Due to the preliminary injection and the temporary valve opening operation, the temperature and pressure inside the decomposer 6 are in the state suitable for the partial oxidation reaction. Accordingly, when the injection amount of the fuel to be reformed is increased, and the valve lift amount of the on-off valve 38 is increased in the recompression stroke S4, the partial oxidation reaction can be further promoted. The internal temperature of the decomposer 6 can be increased. The produced amount of the hydrogen gas can be increased.

Meanwhile, the produced amount of the impure gas is also increased. To handle this, scavenging can be promoted by increasing the valve lift amount in the re-expansion stroke S5. Even when the amount of the impure gas is increased, the impure gas can be effectively eliminated from the inside of the decomposer 6.

(Specific Example of Control by Second Fuel Reforming System)

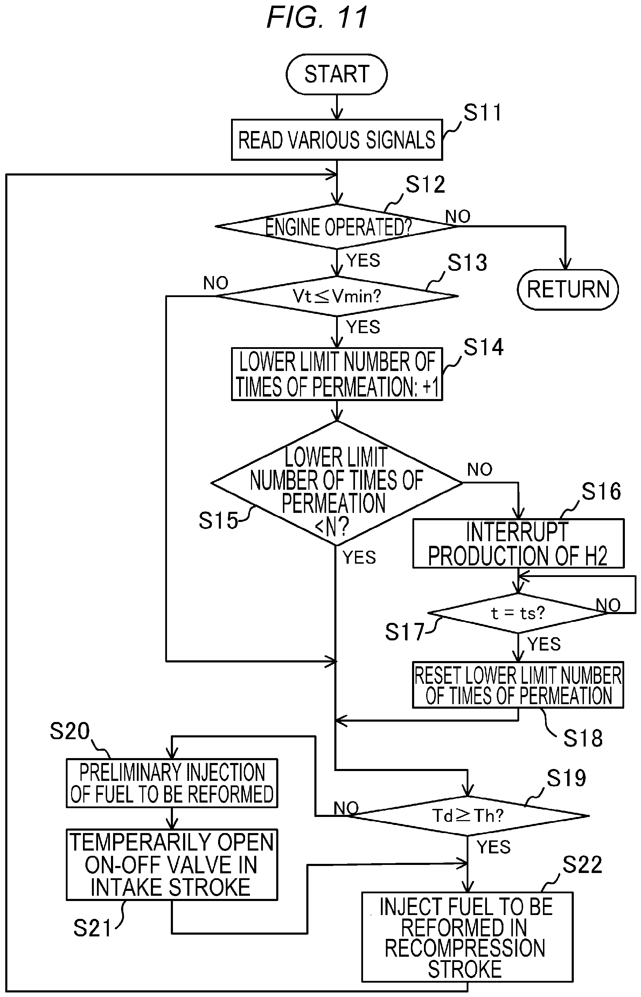

FIG. 11 illustrates an example of control by the second fuel reforming system 1B. It is assumed that the engine 3 performs the combustion in the above-described six-stroke cycle.

The controller 21 reads the various signals input from the accelerator sensor 23 and the like (step S11). During the operation of the engine 3, the controller 21 may identify the output required for the engine 3 based on the read signals, and executes the operation in the above-described six-stroke cycle (Yes in step S12). Then, with the termination of the operation of the engine 3, the control by the controller 21 is also terminated (No in step S12).

During the operation of the engine 3, the controller 21 may estimate a hydrogen permeation amount Vt (an amount of the hydrogen gas permeating the hydrogen permeable membrane 63) based on the signal from the hydrogen gas sensor 26 and the like. Then, the controller 21 may determine whether the hydrogen permeation amount Vt is equal to or smaller than a predetermined lower limit value Vmin set in advance in the controller 21 (step S13).

If the hydrogen permeation amount Vt is equal to or smaller than the lower limit value Vmin, the controller 21 may add "1" to the predetermined lower limit number of times of the permeation (the number of times that the hydrogen permeation amount Vt becomes equal to or smaller than the lower limit value Vmin), which is counted by the controller 21 (step S14).

Thereafter, the controller 21 may determine whether the lower limit number of times of the permeation is smaller than the predetermined limited number of times N set in advance in the controller 21 (step S15). When the lower limit number of times of the permeation is equal to or larger than the limited number of times N, the controller 21 interrupts the production of the hydrogen gas (step S16).

That is, since it is considered that the reforming reaction is inhibited due to an increase in the amount of the impure gas remaining in the decomposer 6, the controller 21 executes processing to repeat scavenging (complete scavenging processing) without injecting the fuel to be reformed. For example, the controller 21 determines whether a predetermined set time ts, which is set in advance in the controller 21, has elapsed (step S17), and repeats the operation in the six-stroke cycle until the set time ts elapses (No in step S17).

On the other hand, if the set time ts has elapsed, the controller 21 may terminate the complete scavenging processing and resets the lower limit number of times of the permeation (step S18).

In step S13 described above, if the hydrogen permeation amount Vt exceeds a lower limit value Vmin, that is, when the production of the hydrogen gas is appropriate, the controller 21 may determine whether an internal temperature Td of the decomposer 6 is equal to or higher than a predetermined determination temperature Th, which is set in advance in the controller 21, based on the signal from the decomposer temperature sensor 25 (step S19).

In step S15, if the lower limit number of times of the permeation is smaller than the limited number of times N, that is, when the complete scavenging processing is not necessary yet, the controller 21 may make the same determination. Furthermore, the controller 21 also makes the same determination when the complete scavenging processing is terminated.

The determination temperature Th may correspond to a lower limit value of a temperature range suitable for the partial oxidation reaction. Thus, when the internal temperature Td of the decomposer 6 is lower than the determination temperature Th, the partial oxidation reaction cannot be appropriately performed. Accordingly, if the internal temperature Td of the decomposer 6 is lower than the determination temperature Th (No in step S19), the controller 21 may execute the temperature-raising mode.

That is, the controller 21 executes the preliminary injection and the temporary valve opening operation described above (steps S20 and S21). As a result, the inside of the decomposer 6 is maintained in the state suitable for the partial oxidation reaction. In this way, the temperature inside the decomposer 6 can be raised to the determination temperature Th or higher. The partial oxidation reaction can be appropriately performed.

If the internal temperature Td of the decomposer 6 is equal to or higher than the determination temperature Th (Yes in step S19), the controller 21 may execute the normal mode. That is, the fuel to be reformed is injected in the recompression stroke S4 (step S22). In addition, similar to the normal mode, after the execution of the preliminary injection and the temporary valve opening operation in the temperature-raising mode, the controller 21 may inject the fuel to be reformed in the recompression stroke S4 (step S22). At this time, as described above, the injection amount may be increased, and the valve lift amount of the on-off valve 38 may also be increased. The produced amount of the hydrogen gas can be increased.

During the operation of the engine 3, the controller 21 repeats such processing.

<Third Embodiment>

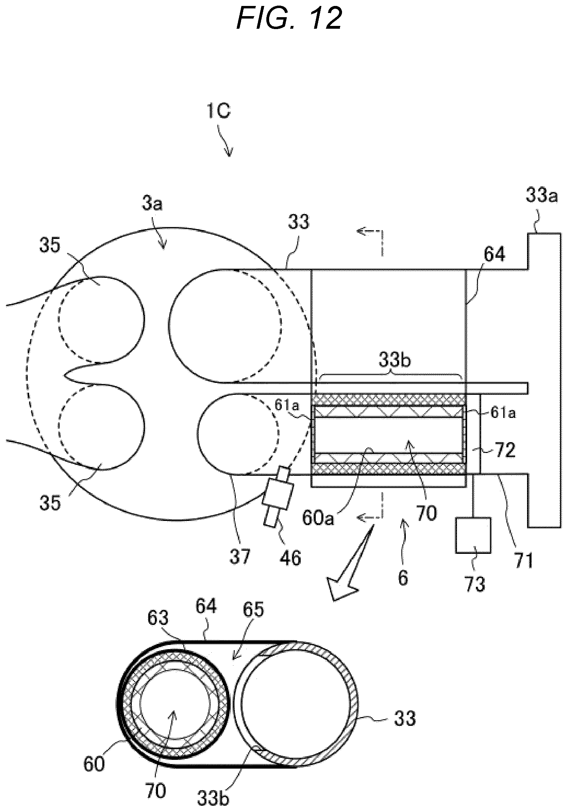

FIG. 12 illustrates further another example of the fuel reforming system (third fuel reforming system 1C) mounted on the vehicle. The third fuel reforming system 1C has the same element as and a different element from the first fuel reforming system 1A and the second fuel reforming system 1B. Thus, the same reference numerals are used to simplify or omit the description of the components having the same contents.

(Configuration of Third Fuel Reforming System)

In the third fuel reforming system 1C, similar to the first fuel reforming system 1A, the reforming injector 46 is disposed in the third port 37. In addition, the reforming member 60 and the case 64 similar to those of the first fuel reforming system 1A are provided. However, the net 61a is attached to the openings on both sides of the support body 61.

Similar to the second fuel reforming system 1B, the tube 60a is provided inside the reforming member 60. Particularly, the tube 60a is formed to have a larger diameter than that of the second fuel reforming system 1B (the large-diameter tube 60a).

Both ends of the large-diameter tube 60a are attached to the respective nets 61a. A large-diameter communication passage 70 is formed inside the reforming member 60 by the large-diameter tube 60a.

The decomposer 6 may be connected to the intake manifold 33a via a relay port 71. Thus, the third port 37 communicates with the intake manifold 33a via the communication passage 70 and the relay port 71. A regulation valve 72 may be installed between the intake manifold 33a and the communication passage 70.

Examples of the regulation valve 72 include a butterfly valve, a rotary valve, and a check valve. The regulation valve 72 allows the flow from the intake manifold 33a side to the third port 37 side. That is, in the third fuel reforming system, the third port 37, the communication passage 70, and the relay port 71 may also function as the intake port 33. Meanwhile, the regulation valve 72 does not allow at least the flow from the third port 37 side to the intake manifold 33a side.

The exemplified regulation valve 72 is configured to be openable/closable (openable and/or closable) and be shut off by the regulation valve opening/closing device 73. Opening of the regulation valve 72 allows the flow of the intake air from the intake manifold 33a side to the third port 37 side. By closing the regulation valve 72, such a flow path is shut off. In this way, not only the flow from the intake manifold 33a side to the third port 37 side, but also the flow from the third port 37 side to the intake manifold 33a side is disabled.

In the third fuel reforming system 1C, as indicated by the imaginary lines in FIG. 4, the regulation valve opening/closing device 73 is added to the control system 2 of the first fuel reforming system 1A together with the decomposer temperature sensor 25 and the hydrogen gas sensor 26.

For example, the regulation valve opening/closing device 73 is further electrically connected to the controller 21. The controller 21 outputs a control signal to the regulation valve opening/closing device 73 according to the operating state of the engine 3. The regulation valve opening/closing device 73 opens/closes (opens and/or closes) the regulation valve 72 based on the control signals from the controller 21 including the signal from the crank angle sensor 24.

(Operation of Reciprocating Engine)

In the third fuel reforming system 1C, similarly to the first fuel reforming system 1A, the engine 3 performs the six-stroke cycle in order for the decomposer 6 to decompose the hydrocarbon fuel. That is, the engine 3 performs each of the strokes illustrated in FIG. 5.

However, the content thereof is different from that of the first fuel reforming system 1A. The third fuel reforming system 1C has an operation mode (filling efficiency improvement mode) for improving filling efficiency.

This engine 3 may have the only one intake port 33. For this reason, for example, when the engine 3 is operated in a high-load and high-speed range, the filling efficiency may be insufficient. Thus, in the third fuel reforming system 1C, the insufficient filling efficiency is compensated by the filling efficiency improvement mode.

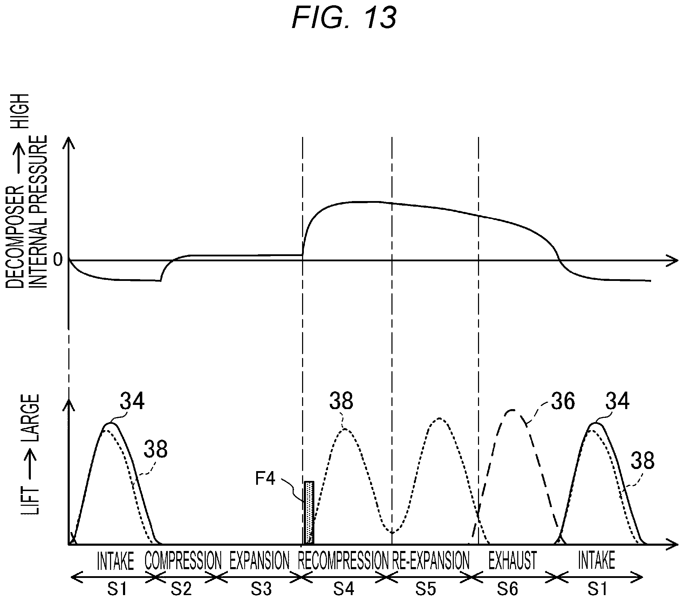

FIG. 13 illustrates examples of the valve timing and the valve lift of each of the valves, the injection timing of the fuel to be reformed, and the change in the internal pressure of the decomposer 6 in the filling efficiency improvement mode.

In the filling efficiency improvement mode, the regulation valve 72 is opened prior to the intake stroke S1. Then, in a state where the regulation valve 72 is opened, the on-off valve 38 is opened during the intake stroke S1.

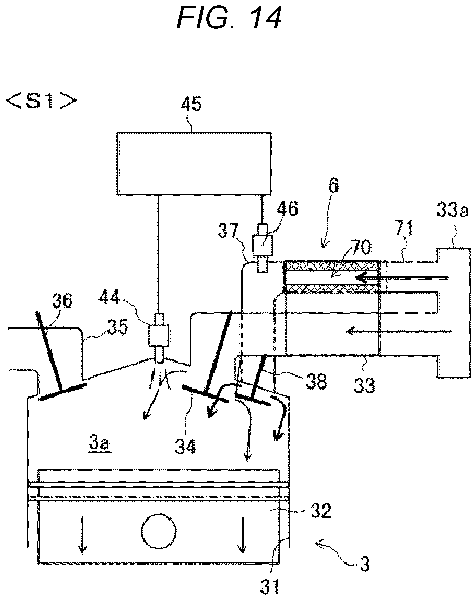

FIG. 14 exemplifies a state of the intake stroke S1 in the filling efficiency improvement mode. The valve lift amount of the on-off valve 38 may be set according to the required filling efficiency. Normally, the on-off valve 38 is also opened in the same manner as the intake valve 34.

Accordingly, in addition to the intake air introduced from the intake port 33, the intake air is introduced into the combustion chamber 3a through a path including the relay port 71, the communication passage 70, and the third port 37. As a result, the filling efficiency can be improved.

In addition, when the intake air is introduced from one place by the intake port 33, a strong flow (particularly, a swirl flow) may be generated in the combustion chamber 3a. Meanwhile, by introducing the intake air from two places, the flow can be mitigated. Thus, the filling efficiency improvement mode improves combustion performance.

Since the piston is lowered during the intake stroke S1, the internal pressure of the decomposer 6 in communication with the intake port 33 dynamically becomes a negative pressure. When the intake stroke S1 is terminated, and the stroke proceeds to the compression stroke S2, the on-off valve 38 is closed together with the intake valve 34. Accordingly, the internal pressure of the decomposer 6 returns to a positive pressure. The inside of the decomposer 6 is filled with the intake air (air).

In the filling efficiency improvement mode, as indicated by the reference numeral F4 in FIG. 13, similar to the second fuel reforming system 1B, the fuel to be reformed may be injected in the first half of the recompression stroke S4. In the recompression stroke S4, the combustion gas in the combustion chamber 3a is compressed by raising the piston 32. Then, when the on-off valve 38 is opened, the compressed combustion gas is introduced into the decomposer 6 through the third port 37.

At this time, when the regulation valve 72 is open, the combustion gas rapidly flows into the third port 37. Thus, the injected fuel to be reformed is effectively dispersed in the combustion gas. Then, the combustion gas in the state where the fuel to be reformed is homogenized is introduced into the decomposer 6. The inside of the decomposer 6 is filled with the high-temperature combustion gas and the air (oxygen) required for the reforming reaction (including the partial oxidation reaction). Thus, the reforming reaction can be promoted.

Thereafter, the regulation valve 72 is closed. The regulation valve 72 may be closed before the recompression stroke S4. The third fuel reforming system 1C in the closed state of the regulation valve 72 has the same configuration as the first fuel reforming system 1A except for the communication passage 70. Thus, in this case, the combustion can be performed with the same contents as that of the first fuel reforming system 1A.

(Specific Example of Control by Third Fuel Reforming System)

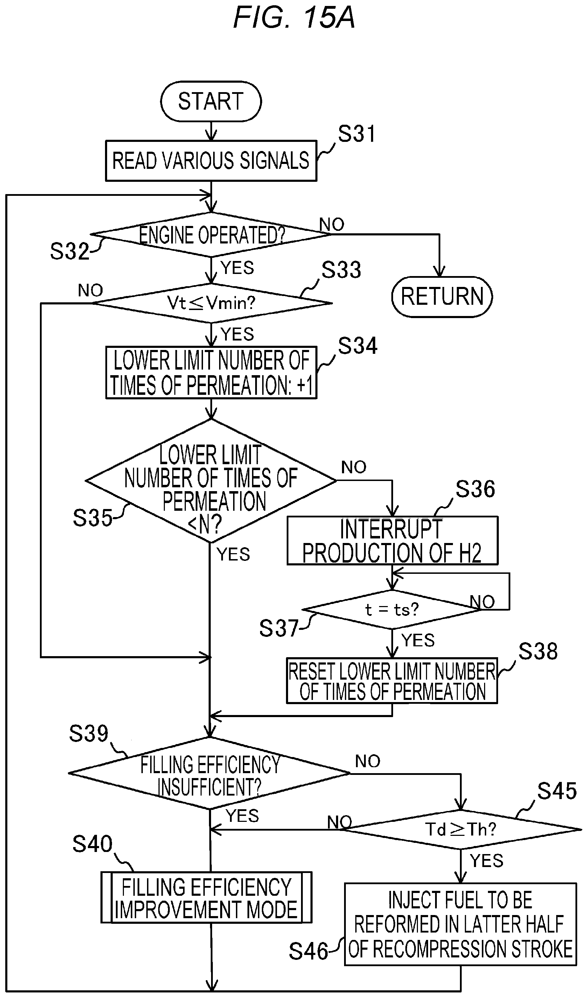

FIG. 15A illustrates an example of control by the third fuel reforming system 1C. It is assumed that the engine 3 performs the combustion in the above-described six-stroke cycle.

The controller 21 reads the various signals input from the accelerator sensor 23 and the like (step S31). During the operation of the engine 3, the controller 21 may identify the output required for the engine 3 based on the read signals, and executes the operation in the above-described six-stroke cycle (Yes in step S32).

Then, with the termination of the operation of the engine 3, the control by the controller 21 is also terminated (No in step S32).

During the operation of the engine 3, the controller 21 may estimate the hydrogen permeation amount Vt based on the signal from the hydrogen gas sensor 26 and the like. Then, the controller 21 determines whether the hydrogen permeation amount Vt is equal to or smaller than the predetermined lower limit value Vmin set in advance in the controller 21 (step S33).

If the hydrogen permeation amount Vt is equal to or smaller than the lower limit value Vmin, the controller 21 may add "1" to the predetermined lower limit number of times of the permeation, which is counted by the controller 21 (step S34).

Thereafter, the controller 21 may determine whether the lower limit number of times of the permeation is smaller than the predetermined limited number of times N set in advance in the controller 21 (step S35). When the lower limit number of times of the permeation is equal to or larger than the limited number of times N, the controller 21 interrupts the production of the hydrogen gas (step S36). Then, the controller 21 may perform the complete scavenging processing.

That is, the controller 21 determines whether the predetermined set time ts, which is set in advance in the controller 21, has elapsed (step S37), and repeats the operation in the six-stroke cycle until the set time ts elapses (No in step S37).

On the other hand, if the set time ts has elapsed, the controller 21 may terminate the complete scavenging processing and resets the lower limit number of times of the permeation (step S38).

In step S33 described above, if the hydrogen permeation amount Vt exceeds the lower limit value Vmin, that is, when the production of the hydrogen gas is appropriate, the controller 21 may estimate the filling efficiency in reality (actual filling efficiency) based on the various signals, and determine whether the actual filling efficiency is insufficient with respect to the required appropriate filling efficiency (required filling efficiency) (step S39).

In step S35, if the lower limit number of times of the permeation is smaller than the limited number of times N, that is, when the complete scavenging processing is not necessary yet, the controller 21 may make the same determination. Furthermore, the controller 21 may also make the same determination when the complete scavenging processing is terminated.

As a result, if it is determined that the actual filling efficiency is insufficient with respect to the required filling efficiency, the controller 21 executes the operation in the filling efficiency improvement mode (step S40).

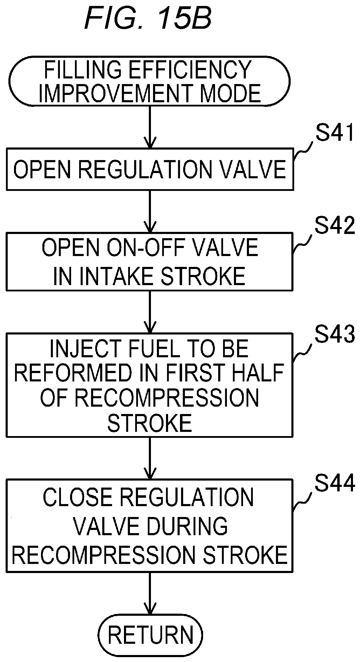

FIG. 15B illustrates a control example in the filling efficiency improvement mode. For example, in the filling efficiency improvement mode, the controller 21 opens the regulation valve 72 prior to the intake stroke S1 (step S41). Thereafter, as illustrated in FIG. 13, the controller 21 opens the on-off valve 38 in the intake stroke S1 (step S42).

As a result, as illustrated in FIG. 14, the intake air is introduced into the combustion chamber 3a through the two paths. As a result, the filling efficiency can be improved, and the required filling efficiency can be achieved. The strong flow in the combustion chamber 3a can be mitigated. Thus, the filling efficiency improvement mode improves the combustion performance. The temperature of the combustion gas is increased. The inside of the decomposer 6 is filled with the intake air (air).

Thereafter, the controller 21 may output the control signal to the reforming injector 46 to inject the fuel to be reformed in the first half of the recompression stroke S4 (step S43). Since the regulation valve 72 is open, the high-temperature combustion gas flows vigorously into the third port 37 by opening the on-off valve 38. Thus, the injected fuel to be reformed is effectively dispersed in the combustion gas.

Then, the high-temperature combustion gas in the state where the reformed fuel is homogenized is introduced into the decomposer 6. The inside of the decomposer 6 is filled with the high-temperature combustion gas and the air (oxygen) required for the reforming reaction. Thus, the reforming reaction can be promoted.

The controller 21 may close the regulation valve 72 at predetermined timing during the recompression stroke S4 (step S44). The timing is timing at which the combustion gas containing the fuel to be reformed does not flow out of the decomposer 6 toward the relay port 71. For example, the regulation valve 72 may be closed simultaneously with or immediately after the injection of the fuel to be reformed. As described above, the regulation valve 72 may be closed before the recompression stroke S4.

The controller 21 may open/close (open and/or close) the regulation valve 72 in the re-expansion stroke S5. In the case where the regulation valve 72 is open in the re-expansion stroke S5, the inside of the decomposer 6 can be effectively scavenged. The reforming reaction can be promoted. In addition, since the pump loss of the engine 3 is also reduced, energy loss can also be suppressed.

On the other hand, if it is determined that the actual filling efficiency is not insufficient with respect to the required filling efficiency, that is, the appropriate filling efficiency is ensured (No in step S39), the controller 21 determines whether the internal temperature Td of the decomposer 6 is equal to or higher than the predetermined determination temperature Th based on the signal from the decomposer temperature sensor 25 (step S45).

As a result, if the internal temperature Td of the decomposer 6 is equal to or higher than the determination temperature Th (Yes in step S45), that is, when the internal temperature of the decomposer 6 is suitable for the reforming reaction, similar to the first fuel reforming system 1A, the controller 21 may inject the fuel to be reformed in the latter half of the recompression stroke S4 (step S46).

On the other hand, if the internal temperature Td of the decomposer 6 is lower than the determination temperature Th, that is, when the temperature is insufficient and the reforming reaction cannot be appropriately performed, the controller 21 executes the filling efficiency improvement mode (No in step S45). When the filling efficiency improvement mode is executed, the internal temperature of the decomposer 6 can be increased. Thus, the generation of the hydrogen gas can be promoted.

After steps S40 and S46, the processing returns to processing prior to step S32. That is, during the operation of the engine 3, the controller 21 repeats a series of such processing.

Note that the invention technique is not limited to the above-described embodiments, and includes various other configurations. For example, the contents of the embodiments may be appropriately combined as necessary. The vehicle to which the invention can be applied is not limited to a hybrid vehicle. The drive source may be the reciprocating engine only.

[Reference Signs List]

  1A to 1C: fuel reforming system
  2: control system
  3: reciprocating engine
  3a: combustion chamber
  6: decomposer
  21: controller
  31: cylinder
  32: piston
  33: intake port
  33a: intake manifold
  33b: opening
  34: intake valve
  35: exhaust port
  36: exhaust valve
  37: third port
  38: on-off valve
  41: intake valve train
  42: exhaust valve train
  43: third valve train
  44: direct injection injector
  45: hydrocarbon fuel supply section
  46: reforming injector
  60: reforming member
  61: support body
  62: carrier
  63: hydrogen permeable membrane
  64: case
  65: communication space
  66: closed pipe passage
  72: regulation valve

73: regulation valve opening/closing device

**Claims**

1. A decomposer (6) for a vehicle on which an engine (3) is mounted, in the engine (3), a combustion chamber (3a) where combustion occurs being partitioned in a cylinder (31) in which a piston (32) reciprocates,
the engine (3) being configured to perform a cycle including at least one of:

   an intake stroke in which at least intake air is introduced into the combustion chamber (3a) through an intake port (33) by lowering the piston (32);
   a compression stroke in which air-fuel mixture containing fuel supplied to the combustion chamber (3a) is compressed by raising the piston (32);
   an expansion stroke in which the piston (32) is lowered by combustion of the air-fuel mixture;
   a recompression stroke in which combustion gas is compressed by raising the piston;
   a re-expansion stroke in which the piston is lowered; and
   an exhaust stroke in which exhaust gas is discharged through an exhaust port by raising the piston,
   the decomposer (6) comprising a hydrogen permeable membrane (63), wherein
   the decomposer (6) is configured to communicate with the combustion chamber (3a),
   the decomposer (6) is configured to decompose hydrocarbon fuel into carbon and hydrogen gas by using heat and a pressure of combustion gas produced in the combustion chamber (3a), to separate the hydrogen gas by causing the hydrogen gas to permeate the hydrogen permeable membrane (63), and to store the carbon, and
   the decomposer (6) is configured to communicate with the intake port (33) via the hydrogen permeable membrane (63), and is configured to be able to supply the separated hydrogen gas as fuel to the combustion chamber (3a) through the intake port (33).

2. A fuel reforming system (1A to 1C) for a vehicle on which an engine (3) is mounted, in the engine (3), a combustion chamber (3a) where combustion occurs being partitioned in a cylinder (31) in which a piston (32) reciprocates,

   the engine (3) being configured to perform a cycle including at least one of:

an intake stroke in which at least intake air is introduced into the combustion chamber (3a) through an intake port (33) by lowering the piston (32);

a compression stroke in which air-fuel mixture containing fuel supplied to the combustion chamber (3a) is compressed by raising the piston (32);

an expansion stroke in which the piston (32) is lowered by combustion of the air-fuel mixture;

a recompression stroke in which combustion gas is compressed by raising the piston (32);

a re-expansion stroke in which the piston (32) is lowered; and

an exhaust stroke in which exhaust gas is discharged through an exhaust port by raising the piston (32), the fuel reforming system (1A to 1C) comprising:

the decomposer (6) according to claim 1; and
a hydrocarbon fuel supply section (45) that is configured to supply the hydrocarbon fuel to the decomposer (6) .

3. The fuel reforming system (1A to 1C) according to claim 2, wherein
in a state of communicating with the intake port (33) via the hydrogen permeable membrane (63), the decomposer (6) is disposed adjacent to the intake port (33).

4. The fuel reforming system (1A to 1C) according to claim 2 or 3, wherein

the decomposer (6) further comprises a case (64) and a reforming member (60) that is accommodated in the case (64),
the reforming member (60) includes a support body (61), and
the hydrogen permeable membrane (63) is supported on the support body (61).

5. The fuel reforming system (1A to 1C) according to claim 4, wherein
the case (64) is installed along the intake port (33).

6. The fuel reforming system (1A to 1C) according to claim 4 or 5, wherein

the reforming member (60) further includes a carrier (62) and one or more nets (61a) configured to catch the carrier (62), and
at least one net (61a) is attached to an opening of the support body (61).

7. The fuel reforming system (1A; 1C) according to any one of claims 2 to 6, wherein
an injector (46) configured to inject the hydrocarbon fuel toward inside of the third port (37) is attached to the third port (37).

8. The fuel reforming system (1A; 1C) according to claim 7, wherein
in a latter half of the recompression stroke, the injector (46) is configured to inject the hydrocarbon fuel in an open state of the third port (37).

9. The fuel reforming system (1B) according to any one of claim 2 or 3, wherein
the decomposer (6) has:

a case (64) that is installed along the intake port (33) ;
a reforming member (60) that is accommodated in the case (64) in a manner to extend along the case (64); and
a closed pipe passage (66) that is provided in the reforming member (60) and an open end of which communicates with the third port (37),
an injector (46) for injecting the hydrocarbon fuel from a closed end side of the closed pipe passage (66) toward the closed pipe passage (66) is attached to the decomposer (6) .

10. The fuel reforming system (1B) according to claim 9, wherein
the closed pipe passage (66) is provided in a central portion of the reforming member (60).

11. The fuel reforming system (1B) according to claim 9 or 10, wherein
in a first half of the recompression stroke, the second injector (46) is configured to inject the hydrocarbon fuel in an open state of the third port (37).

12. The fuel reforming system (1A to 1C) according to any one of claims 2 to 11, wherein
the third port (37) is configured to be opened during the re-expansion stroke.

13. The fuel reforming system (1C) according to any one of the preceding claims 2 to 12, wherein

the decomposer (6) has a communication passage (70) therein, the communication passage (70) communicating between the third port (37) and an intake supply section (33a) located on an upstream side of the intake port (33), and
a regulation valve (72) capable of blocking a flow from the third port (37) toward the intake supply section (33a) is installed between the intake supply section (33a) and the communication passage (70).

**14.** A vehicle comprising:

> an engine (3) having a combustion chamber (3a) partitioned in a cylinder (31) in which a piston (32) reciprocates; and
> the decomposer (6) according to claim 1, or the fuel reforming system (1A to 1C) according to any one of claims 2 to 13.

**15.** A method of supplying fuel for an engine (3), in the engine (3), a combustion chamber (3a) where combustion occurs being partitioned in a cylinder (31) in which a piston (32) reciprocates,

> the engine (3) being configured to perform a cycle including at least one of:
>
>> an intake stroke in which at least intake air is introduced into the combustion chamber (3a) through an intake port (33) by lowering the piston (32);
>> a compression stroke in which air-fuel mixture containing fuel supplied to the combustion chamber (3a) is compressed by raising the piston (32);
>> an expansion stroke in which the piston (32) is lowered by combustion of the air-fuel mixture;
>> a recompression stroke in which combustion gas is compressed by raising the piston (32);
>> a re-expansion stroke in which the piston (32) is lowered; and
>> an exhaust stroke in which exhaust gas is discharged through an exhaust port by raising the piston (32),
>
> the method comprising:
>
>> opening a third port (37) such that a decomposer (6) communicates with the combustion chamber (3a) via the third port (37), wherein the decomposer (6) is configured to decompose hydrocarbon fuel into carbon and hydrogen gas and store the carbon; and
>> supplying the hydrocarbon fuel to the decomposer (6), wherein
>> the decomposer (6) is configured to decompose the hydrocarbon fuel into the carbon and the hydrogen gas by using heat and a pressure of combustion gas produced in the combustion chamber (3a), to separate the hydrogen gas by causing the hydrogen gas to permeate a hydrogen permeable membrane (63), and
>> the decomposer (6) is disposed to communicate with the intake port (33) via the hydrogen permeable membrane (63), and is configured to be able to supply the separated hydrogen gas as fuel to the combustion chamber (3a) through the intake port (33).

## FIG. 1

## FIG. 2

## FIG. 3

## FIG. 4

INTAKE VALVE TRAIN ~41

EXHAUST VALVE TRAIN ~42

THIRD VALVE TRAIN ~43

DIRECT INJECTION INJECTOR ~44

REFORMING INJECTOR ~46

IGNITION PLUG ~27

INVERTER ~28

DRIVE MOTOR ~28a

REGULATION VALVE OPENING/CLOSING DEVICE ~73

ROTATIONAL SPEED SENSOR ~22

ACCELERATOR SENSOR ~23

CRANK ANGLE SENSOR ~24

DECOMPOSER TEMPERATURE SENSOR ~25

H2 SENSOR ~26

## FIG. 5

S1: INTAKE STROKE

S2: COMPRESSION STROKE

S3: EXPANSION STROKE

S6: EXHAUST STROKE

S5: RE-EXPANSION STROKE

S4: RECOMPRESSION STROKE

## FIG. 6

# FIG. 7

START

READ VARIOUS SIGNALS — S1

S2 ENGINE OPERATED? — NO

YES

S3 H2 PRODUCTION REQUIRED? — NO

YES

INJECT FUEL TO BE REFORMED IN RECOMPRESSION STROKE — S4

RETURN

# FIG. 8

## FIG. 9

EP 4 603 692 A1

# FIG. 10

<S4>

28

## FIG. 11

START

READ VARIOUS SIGNALS — S11

S12

ENGINE OPERATED? —NO→ RETURN

YES

S13

Vt ≤ Vmin? —NO→

YES

LOWER LIMIT NUMBER OF TIMES OF PERMEATION: +1 — S14

LOWER LIMIT NUMBER OF TIMES OF PERMEATION < N? —NO→ INTERRUPT PRODUCTION OF H2 — S16

S15

YES

t = ts? —NO→

S17

YES

RESET LOWER LIMIT NUMBER OF TIMES OF PERMEATION

S18

S19

Td ≥ Th? —NO→

YES

S20

PRELIMINARY INJECTION OF FUEL TO BE REFORMED

TEMPERARILY OPEN ON-OFF VALVE IN INTAKE STROKE

S21

INJECT FUEL TO BE REFORMED IN RECOMPRESSION STROKE — S22

*FIG. 12*

# FIG. 13

# FIG. 14

EP 4 603 692 A1

## FIG. 15A

START

READ VARIOUS SIGNALS — S31

S32 — ENGINE OPERATED? — NO → RETURN

YES

S33 — Vt ≤ Vmin? — NO

YES

LOWER LIMIT NUMBER OF TIMES OF PERMEATION: +1 — S34

LOWER LIMIT NUMBER OF TIMES OF PERMEATION < N? — S35 — NO → INTERRUPT PRODUCTION OF H2 — S36

YES

t = ts? — S37 — NO

YES

RESET LOWER LIMIT NUMBER OF TIMES OF PERMEATION — S38

S39 — FILLING EFFICIENCY INSUFFICIENT? — NO → Td ≥ Th? — S45

YES — NO

S40 — FILLING EFFICIENCY IMPROVEMENT MODE

YES

INJECT FUEL TO BE REFORMED IN LATTER HALF OF RECOMPRESSION STROKE — S46

## FIG. 15B

```
FILLING EFFICIENCY
IMPROVEMENT MODE
```

S41
```
OPEN REGULATION VALVE
```

S42
```
OPEN ON-OFF VALVE
IN INTAKE STROKE
```

S43
```
INJECT FUEL TO BE
REFORMED IN FIRST HALF
OF RECOMPRESSION
STROKE
```

S44
```
CLOSE REGULATION
VALVE DURING
RECOMPRESSION STROKE
```

```
RETURN
```

Europäisches
Patentamt

European
Patent Office

Office européen
des brevets

# EUROPEAN SEARCH REPORT

**Application Number**

EP 25 15 3457

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | JP 2024 110816 A (MAZDA MOTOR) 16 August 2024 (2024-08-16) * figures 1-3, 5 * * paragraphs [0051] - [0064] * * paragraphs [0083] - [0098] * | 1-4,7,8, 12,14,15 | INV. F02D13/02 C01B3/26 F02B43/10 F02B75/02 F02D19/06 F02M27/02 |
| X,P | JP 2024 110818 A (MAZDA MOTOR) 16 August 2024 (2024-08-16) * figures 1-3, 5 * * paragraphs [0057] - [0105] * | 1-4,7,8, 12,14,15 | |
| X,P | JP 2024 110819 A (MAZDA MOTOR) 16 August 2024 (2024-08-16) * figures 1-3, 5 * | 1-4,7,8, 12,14,15 | |
| Y | EP 2 472 079 B1 (SAUDI ARABIAN OIL CO [SA]) 9 April 2014 (2014-04-09) * paragraphs [0019] - [0032] * * figures 1,2 * | 1,2,14 | |
| Y | US 2008/202449 A1 (SHIMADA ATSUSHI [JP] ET AL) 28 August 2008 (2008-08-28) * figures 1,2 * * paragraphs [0035], [0036] * | 1,2,14 | TECHNICAL FIELDS SEARCHED (IPC) F02D F02M C01C F02B C01B |
| A | WO 2007/057720 A1 (CHOIDAS DIONYSIOS [GR]) 24 May 2007 (2007-05-24) * figure 4B * | 1-15 | |

The present search report has been drawn up for all claims

| Place of search | Date of completion of the search | Examiner |
|---|---|---|
| The Hague | 26 June 2025 | Röttger, Klaus |

EPO FORM 1503 03.82 (P04C01)

EP 4 603 692 A1

## ANNEX TO THE EUROPEAN SEARCH REPORT
## ON EUROPEAN PATENT APPLICATION NO.

EP 25 15 3457

26-06-2025

| Patent document cited in search report | Publication date | Patent family member(s) | Publication date |
|---|---|---|---|
| JP 2024110816 A | 16-08-2024 | NONE | |
| JP 2024110818 A | 16-08-2024 | NONE | |
| JP 2024110819 A | 16-08-2024 | NONE | |
| EP 2472079 B1 | 09-04-2014 | BR PI0607973 A2 | 27-10-2009 |
| | | CA 2600018 A1 | 08-09-2006 |
| | | DK 1861599 T3 | 10-02-2014 |
| | | DK 2472079 T3 | 07-07-2014 |
| | | EP 1861599 A1 | 05-12-2007 |
| | | EP 2472079 A1 | 04-07-2012 |
| | | JP 4485578 B2 | 23-06-2010 |
| | | JP 2008531924 A | 14-08-2008 |
| | | KR 20080009192 A | 25-01-2008 |
| | | US 2010175639 A1 | 15-07-2010 |
| | | WO 2006094137 A1 | 08-09-2006 |
| US 2008202449 A1 | 28-08-2008 | CN 101255832 A | 03-09-2008 |
| | | DE 102008004673 A1 | 04-09-2008 |
| | | JP 4687666 B2 | 25-05-2011 |
| | | JP 2008215092 A | 18-09-2008 |
| | | US 2008202449 A1 | 28-08-2008 |
| WO 2007057720 A1 | 24-05-2007 | NONE | |

**EP 4 603 692 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 22022104521 A